(19) Europäisches Patentamt
European Patent Office
Office européen des brevets

(11) **EP 4 723 250 A1**

(12) **EUROPEAN PATENT APPLICATION**
published in accordance with Art. 153(4) EPC

(43) Date of publication:
08.04.2026 Bulletin 2026/15

(51) International Patent Classification (IPC):
$H01M\ 4/66^{(2006.01)}$ $C25D\ 1/04^{(2006.01)}$
$C25D\ 1/00^{(2006.01)}$

(21) Application number: 24921391.9

(22) Date of filing: 26.08.2024

(52) Cooperative Patent Classification (CPC):
Y02E 60/10

(86) International application number:
PCT/CN2024/114594

(87) International publication number:
WO 2025/161365 (07.08.2025 Gazette 2025/32)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 01.02.2024 CN 202410146761

(71) Applicant: Contemporary Amperex Technology Co., Limited
Ningde, Fujian 352100 (CN)

(72) Inventors:
• LI, Shisong
Ningde, Fujian 352100 (CN)

• WU, Jiacheng
Ningde, Fujian 352100 (CN)
• ZHENG, Tuo
Ningde, Fujian 352100 (CN)
• LI, Diwu
Ningde, Fujian 352100 (CN)
• WANG, Xiaoli
Ningde, Fujian 352100 (CN)
• QU, Jiangjiang
Ningde, Fujian 352100 (CN)

(74) Representative: Kraus & Lederer PartGmbB
Thomas-Wimmer-Ring 15
80539 München (DE)

(54) **CURRENT COLLECTOR, ELECTRODE SHEET, SECONDARY BATTERY, ELECTRIC DEVICE, COPPER FOIL, AND PREPARATION METHOD FOR COPPER FOIL**

(57) A current collector, an electrode sheet, a secondary battery, an electric device, a copper foil, and a preparation method for the copper foil. The current collector comprises the copper foil, the average particle size of the crystal grains in the copper foil ranges from 50 nm to 400 nm, and based on the total number of crystal grains in the copper foil, the proportion of the crystal grains of nano twin crystals is greater than or equal to 60%. The combination of the high proportion nano twin crystal structure and the small crystal grain size functions to improve the mechanical strength of the current collector while maintaining the high plasticity of the current collector, thereby providing a material basis for further improvement of the energy density and safety of the battery.

FIG. 1

EP 4 723 250 A1

**Description**

CROSS-REFERENCE

The present application refers to Chinese Patent Application No. 202410146761.1, entitled "CURRENT COLLECTOR, ELECTRODE PLATE, SECONDARY BATTERY, ELECTRIC DEVICE, COPPER FOIL, AND PREPARATION METHOD FOR COPPER FOIL", filed on February 1, 2024, which is incorporated herein by reference in its entirety.

TECHNICAL FIELD

The present application relates to the technical field of batteries, and in particular, to a current collector, an electrode plate, a secondary battery, an electric device, a copper foil, and a preparation method for the copper foil.

BACKGROUND

In recent years, secondary batteries have been widely used in energy storage power systems such as hydropower, thermal power, wind power, and solar power stations, as well as in various fields such as electric tools, electric bicycles, electric motorcycles, electric vehicles, military equipment, and aerospace.

The current collector is an important part of the secondary battery. As the market places higher requirements on energy density and safety performance of secondary batteries, it is urgent to develop a lightweight and high-strength current collector to satisfy the needs of a new generation of secondary batteries.

SUMMARY

The present application is made in view of the above problems, and its objective is to provide an ultrathin current collector having excellent mechanical properties to satisfy the requirements of a new generation of high-performance batteries for current collectors.

In order to achieve the above objective, the present application provides a current collector, an electrode plate, a secondary battery, an electric device, a copper foil, and a preparation method for the copper foil.

A first aspect of the present application provides a current collector. The current collector includes a copper foil, an average grain size of grains in the copper foil is 50 nm to 400 nm, and based on a total number of the grains in the copper foil, a number proportion of nanotwinned grains is not less than 60%.

The twinned structure is an effective means for enhancing the strength and plasticity of the metal. The twin boundary is a coherent interface with orderly arranged atoms, which can maintain the mobility of dislocations while enhancing the strength of the material by increasing the resistance to the dislocation motions, thereby maintaining the plasticity of the material while strengthening the material. The small grain size can further increase the interface structure, raising the applied stress required by dislocations to traverse the grain boundaries, thereby achieving material strengthening. The combination of the high-proportion nanotwinned structure and the small grain size functions to enhance the mechanical strength of the copper foil while maintaining its high plasticity, thereby providing a material basis for further improvement of the energy density and safety of the battery.

In any embodiment, the average grain size of the grains in the copper foil is 50 nm to 300 nm.

The copper foil with an average grain size within the above range can further enhance the mechanical strength of the copper foil while maintaining its high plasticity, thereby satisfying the use requirements of a new generation of secondary batteries with high energy density.

In any embodiment, based on the total number of the grains in the copper foil, a number proportion of grains with a grain size of less than 200 nm is 20% to 40%, and a number proportion of grains with a grain size of 200 nm to 500 nm is 50% to 80%.

In any embodiment, based on the total number of the grains in the copper foil, a number proportion of grains with a grain size of greater than 500 nm is less than or equal to 5%.

In the prior art, microtwins are often introduced into copper foils reinforced in a twinning strengthening manner during preparation, which hinders further enhancement of the strength of the copper foil. The copper foil according to the embodiments of the present application has a high proportion of nanotwins, which significantly enhances the strength of the copper foil. In addition, the grains have a small average grain size, the grain size exhibits a skewed distribution, and the number proportion of grains with a grain size of greater than 500 nm is very small. The fine grains reduce the occurrence of stress concentration during the deformation of the copper foil, and are more beneficial to the slip coordination of the grains. Therefore, the elongation at break can be improved while enhancing the strength of the copper foil.

In any embodiment, based on the total number of the grains in the copper foil, a number proportion of equiaxed grains or nearly equiaxed grains is greater than or equal to 80%, and a ratio a1 of a length of a major axis to a length of a minor axis of the equiaxed grain or the nearly equiaxed grain satisfies: $1 \leq a1 < 2$.

A large number of equiaxed grains or nearly equiaxed grains are beneficial for achieving isotropy of the copper foil in various directions, thereby helping comprehensively enhance the strength and plasticity of the copper foil.

In any embodiment, based on the total number of the grains in the copper foil, a number proportion of columnar grains is less than 10%, and a ratio a2 of a length of a major axis to a length of a minor axis of the columnar grain satisfies: $a2 > 2$.

The formation of the columnar grains tends to result in anisotropy in the mechanical properties of the copper foil. Therefore, reducing the number proportion of the columnar grains is beneficial for enhancing the mechanical strength and plasticity of the copper foil and reducing the formation probability of stress concentration points.

In any embodiment, a proportion of plane diffraction intensity of (111) texture in the copper foil in a sum of plane diffraction intensities of (111), (200), (220), (311), and (222) textures in the copper foil is 60% to 85%.

For pure copper materials, common textures include textures of (111), (200), (220), (311), and (222). Due to the crystallographic characteristics, the (111) plane has a large atomic density and high mechanical strength, which can improve the twinning strengthening effect. The copper foil with a proportion of the plane diffraction intensity of the (111) texture in the sum of plane diffraction intensities of the (111), (200), (220), (311), and (222) textures in the copper foil within the above range is beneficial for enhancing the mechanical strength and plasticity of the copper foil.

In any embodiment, the copper foil has a first surface and a second surface that are opposite to each other, a thickness of the copper foil is denoted as H, a region extending from the first surface of the copper foil to a thickness range of 0.2H to 0.5H is defined as a first region of the copper foil, a region extending from the second surface of the copper foil to a thickness range of 0.2H to 0.5H is defined as a second region of the copper foil, and an absolute value of a difference between an average grain size of grains in the first region and an average grain size of grains in the second region is less than or equal to 150 nm.

The size and structure of the grains in this copper foil also exhibit high uniformity along the thickness direction of the copper foil, which provides a basis for the copper foil to maintain high strength and high plasticity while achieving ultrathin thickness.

In any embodiment, based on the total number of the grains in the copper foil, the number proportion of the nanotwinned grains is 65% to 90%.

In any embodiment, a maximum surface roughness of the copper foil is less than or equal to 3 $\mu$m.

The copper foil with the maximum surface roughness of not greater than 3 $\mu$m has a smooth and uniform surface, and it is less prone to the formation of stress concentration points under cyclic loading, which is beneficial for enhancing the mechanical strength and plasticity of the copper foil.

In any embodiment, a thickness H of the copper foil satisfies: $3 \mu m \leq H \leq 15 \mu m$.

This copper foil has a low thickness, enabling effective weight reduction of the battery, thereby facilitating further increase of the energy density of the battery.

In any embodiment, under test conditions of room temperature, a sample thickness of $6 \pm 0.2 \mu m$, and a tensile speed of $50 \pm 0.5$ mm/min, a tensile strength of the copper foil is greater than or equal to 600 MPa, and an elongation at break of the copper foil is greater than or equal to 4%.

In any embodiment, under the test conditions of room temperature, the sample thickness of $6 \pm 0.2 \mu m$, and the tensile speed of $50 \pm 0.5$ mm/min, the tensile strength of the copper foil is 700 MPa to 1500 MPa, and the elongation at break of the copper foil is 4.5% to 10%.

The above copper foil has both high strength and high plasticity, which can satisfy the use requirements of batteries with high energy density, and improve the safety of the battery while increasing the energy density of the battery.

A second aspect of the present application provides an electrode plate. The electrode plate includes the current collector according to any embodiment.

A third aspect of the present application provides a secondary battery. The secondary battery includes the electrode plate according to the second aspect.

In any embodiment, the secondary battery is any one of a battery cell, a battery module, and a battery pack.

In any embodiment, a maximum expansion force of the secondary battery cell is greater than or equal to 1000 kgf.

In any embodiment, a maximum expansion force of the secondary battery cell is greater than or equal to 2500 kgf.

In any embodiment, a maximum expansion force of the secondary battery cell is greater than or equal to 4000 kgf. The current collector in the prior art is prone to breakage under a high expansion force of the secondary battery, which causes safety accidents and limits further improvement of the electrochemical performance of the secondary battery. The current collector according to the embodiments of the present application has both excellent tensile strength and elongation at break, and thus can be applied to a secondary battery with a high expansion force, which is beneficial for further increasing the energy density of the secondary battery.

A fourth aspect of the present application provides an electric device. The electric device includes the secondary battery according to the third aspect.

A fifth aspect of the present application provides a preparation method for a copper foil. The copper foil is prepared by using an electroplating method. The electroplating method specifically includes periodically applying a current to an electroplating solution, such that copper ions in the electroplating solution are reduced and deposited to form a copper foil; an average grain size of grains in the copper foil is 50 nm to 400 nm, and based on a total number of the grains in the copper foil, a number proportion of nanotwinned grains is greater than or equal to 60%.

In any embodiment, the current is a pulse current, and the pulse current includes one or more of a square wave pulse current, a sinusoidal wave pulse current, a triangular wave pulse current, and a sawtooth wave pulse current.

By applying the pulse current to the electroplating solution, the processes of nucleation of reduced copper ions and grain growth can be controlled by the on and off of the current, thereby inhibiting the grain growth to form uniform nanograins, so as to enhance the tensile strength and elongation at break of the copper foil. Compared with the direct current electrodeposition commonly used in the prior art, the pulse current electrodeposition can achieve a higher peak current density, which is beneficial to extensive nucleation of copper foil, thereby increasing the density of the copper foil and reducing the grain size of the copper foil, so as to enhance the mechanical strength of the copper foil.

In any embodiment, the electroplating solution includes an additive, and the additive includes one or more of a leveling agent, a wetting agent, and a brightener.

In any embodiment, the additive includes the leveling agent, the wetting agent, and the brightener.

The leveling agent can adhere to tips of the copper foil where deposition rate is high, inhibit grain growth, balance the growth rates of pits and the tips, and improve the flatness of the copper foil. The wetting agent can improve the wettability between the electroplating solution and the substrate, and the wettability of the electroplating solution on the cathode is sufficient to achieve rapid electrodeposition in cooperation with a high current, thereby improving the nucleation rate of the copper foil and reducing the average grain size of the grains in the copper foil. A certain content of brightener can make the grain size of the copper foil smaller, and reduce the surface roughness of the copper foil, thereby improving the surface smoothness.

In any embodiment, a concentration of the leveling agent in the electroplating solution is 20 mg/L to 300 mg/L.

In any embodiment, a concentration of the leveling agent in the electroplating solution is 50mg/L to 150 mg/L.

In any embodiment, a concentration of the wetting agent in the electroplating solution is 10 mg/L to 200 mg/L.

In any embodiment, a concentration of the wetting agent in the electroplating solution is 30mg/L to 100 mg/L.

In any embodiment, a concentration of the brightener in the electroplating solution is 10 mg/L to 200 mg/L.

In any embodiment, a concentration of copper ions in the electroplating solution is 30 g/L to 100 g/L.

In any embodiment, a concentration of copper ions in the electroplating solution is 45g/L to 75 g/L.

The research results show that compared with the combination of high copper ion concentration and low additive concentration, the combination of low copper ion concentration and high additive concentration is more beneficial for comprehensively enhancing the strength and elongation at break of the copper foil. In addition, the low copper ion concentration can help reduce concentration polarization and control the growth and deposition speeds of the grains, facilitating the preparation of small-sized grains, thereby enhancing the mechanical strength of the copper foil.

In any embodiment, a concentration of chloride ions in the electroplating solution is 10 mg/L to 80 mg/L.

In any embodiment, a pH of the electroplating solution is 2.5 to 4.4.

In any embodiment, the leveling agent includes one or more of gelatin and Janus green, the wetting agent includes one or more of hydroxyethyl cellulose and polyethylene glycol, and the brightener includes one or more of bis-(sodium sulfopropyl)-disulfide, sodium 3-mercapto-1-propanesulfonate, and thiourea.

In any embodiment, the wetting agent includes hydroxyethyl cellulose and polyethylene glycol.

The research results show that compared with adding a single type of wetting agent, simultaneously adding two different wetting agents can more effectively enhance the mechanical strength of the copper foil. Although the mechanism is not clear, it is speculated that the mechanism may be related to competitive adsorption between the two different types of additives, which is beneficial for improving the consistency of the grains during the deposition process, and reducing the difference in the grain size along the thickness direction, thereby enhancing the uniformity of the copper foil.

In any embodiment, a mass concentration ratio of the copper ions to the leveling agent is 500:1 to 4500:1; and/or a mass concentration ratio of the copper ions to the brightener is 300:1 to 6000:1.

In some embodiments, the electroplating solution includes gelatin with a concentration of 20 mg/L to 150 mg/L, polyethylene glycol with a concentration of 15 mg/L to 100 mg/L, hydroxyethyl cellulose with a concentration of 10 mg/L to 80 mg/L, bis-(sodium sulfopropyl)-disulfide with a concentration of 15 mg/L to 150 mg/L, copper ions with a concentration of 45 g/L to 90 g/L, and chloride ions with a concentration of 10 mg/L to 80 mg/L.

In any embodiment, a peak current density of the pulse current is represented by I, with a unit of $A/dm^2$, a current duty cycle of the pulse current is represented by s, and the peak current density I and the duty cycle s satisfy: $2\,A/dm^2 \leq I \times s \leq 18\,A/dm^2$.

The product of the peak current density I and the duty cycle s is equivalent to the average density of the current over the pulse period. In the pulse deposition manner, the average density of the current over the pulse period is enabled to be higher than the maximum current density that can be achieved during direct current electrodeposition, because an excessively high direct current electrodeposition density causes hydrogen evolution and concentration polarization in the electroplating solution, resulting in a reduction in the uniformity of the copper foil during the electrodeposition process. The product of the peak current density I and the duty cycle s within the above range can effectively reduce the grain size and also improve the uniformity of the grain size along the thickness direction of the prepared copper foil. The combination of the product of the peak current density I and the duty cycle s within the above range and the low copper ion concentration in the electroplating solution can further mitigate the concentration polarization phenomenon of the electroplating solution, achieving the preparation of small-sized grains, thereby enhancing the tensile strength and elongation at break of the copper foil. In any embodiment, the peak current density I of the pulse current satisfies: $3.3 \ A/dm^2 \leq I \leq 333 \ A/dm^2$.

In any embodiment, the duty cycle s of the pulse current satisfies: $2\% \leq s \leq 50\%$.

In any embodiment, a pulse width of the pulse current is 1 ms to 50 ms.

In any embodiment, a distance between a cathode electrode and an anode electrode is 15 mm to 20 mm.

In any embodiment, a temperature of the deposition is 45 °C to 60 °C.

In any embodiment, a duration of the deposition is greater than or equal to 80 s.

In any embodiment, the electroplating method specifically includes periodically applying the pulse current to the electroplating solution, such that the copper ions in the electroplating solution are reduced and deposited, where the peak current density I of the pulse current satisfies $100 \ A/dm^2 \leq I \leq 180 \ A/dm^2$, the duty cycle s of the pulse current satisfies $2\% \leq s \leq 10\%$, and the duration of the deposition is 80 s to 250 s.

In any embodiment, the preparation method is a continuous production method.

A sixth aspect of the present application provides a copper foil. The copper foil includes the same features as the copper foil in the foregoing current collector, and the details are not described herein again.

In any embodiment, the copper foil is prepared by using the preparation method according to the fifth aspect.

In any embodiment, a maximum width of the copper foil is greater than or equal to 1.5 meters, and/or a maximum length of the copper foil is greater than or equal to 10,000 meters.

This copper foil can be manufactured in a large size, and thus has a prospect of industrial application.

BRIEF DESCRIPTION OF THE DRAWINGS

In order to more clearly illustrate the technical solutions of the embodiments of the present application, the drawings required to be used in the embodiments of the present application are briefly described below. Apparently, the drawings in the following description illustrate merely some embodiments of the present application, and those of ordinary skill in the art may still derive other drawings from these drawings without creative efforts.

FIG. 1 is a schematic diagram of a grain size distribution of the copper foil in Example 1 of the present application;

FIG. 2 is an inverse pole figure map of an electron backscatter diffraction image of the copper foil in Example 1 of the present application;

FIG. 3 is a diagram of a tensile curve of the copper foil in Example 1 of the present application;

FIG. 4a is an X-ray diffraction pattern of the copper foil in Example 2 of the present application; FIG. 4b is an X-ray diffraction pattern of the copper foil in Comparative Example 1 of the present application;

FIG. 5 is a schematic diagram of one embodiment of a secondary battery according to the present application;

FIG. 6 is a schematic exploded diagram of one embodiment of a secondary battery according to the present application;

FIG. 7 is a schematic diagram of one embodiment of a battery module of the present application;

FIG. 8 is a schematic diagram of one embodiment of a battery pack of the present application;

FIG. 9 is a schematic exploded diagram of the embodiment of the battery pack shown in FIG. 8; and

FIG. 10 is a schematic diagram of one embodiment of an electric device including the secondary battery according to the present application as a power source.

The drawings are not necessarily drawn to scale. The attached reference numerals are as follows: 1: battery pack; 2: upper case body; 3: lower case body; 4: battery module; 5: secondary battery; 51: housing; 52: electrode assembly; 53: cover plate.

DETAILED DESCRIPTION

Hereinafter, embodiments of the current collector, the electrode plate, the secondary battery, the electric device, the copper foil, and the preparation method for the copper foil according to the present application are specifically disclosed in detail with appropriate reference to the drawings. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60 to 120 and 80 to 110 are listed for a particular parameter, it is understood that ranges of 60 to 110 and 80 to 120 are also anticipated. Additionally, if the minimum range values listed are 1 and 2, and the maximum range values listed are 3, 4, and 5, then the following ranges can all be anticipated: 1 to 3, 1 to 4, 1 to 5, 2 to 3, 2 to 4, and 2 to 5. In the present application, unless otherwise specified, the numerical range "a to b" indicates an abbreviated representation of any combination of real numbers between a and b, where both a and b are real numbers. For example, the numerical range "0 to 5" indicates that all real numbers between 0 and 5 are listed herein, and "0 to 5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions, and such technical solutions should be deemed to be included in the disclosure of the present application.

Unless otherwise specified, all technical features and optional technical features of the present application can be combined with one another to form new technical solutions, and such technical solutions should be deemed to be included in the disclosure of the present application.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b).

Unless otherwise specified, the "include" and "comprise" mentioned in the present application are open-ended or closed-ended. For example, the "include" and "comprise" may mean that other unlisted components may also be included or comprised or that only the listed components are included or comprised.

Unless otherwise specified, the term "or" in the present application is inclusive. For example, the phrase "A or B" means "A, B, or both A and B". More specifically, any one of the following conditions satisfies the condition "A or B": A is true (or present) and B is false (or absent); A is false (or absent) and B is true (or present); or both A and B are true (or present).

Unless otherwise specified, the terms used in the present application have well-known meanings that are commonly understood by those skilled in the art.

Unless otherwise specified, the values of the parameters mentioned in the present application can be measured by various test methods commonly used in the art. For example, they can be measured according to the test methods given in the present application. Specifically, during the test process, the sampling region is used to characterize the overall microstructure of the copper foil.

Unless otherwise specified, in the present application, the term "active ion" refers to an ion that can be intercalated and deintercalated back and forth between the positive and negative electrodes of the secondary battery, including but not limited to lithium ion.

In the present application, the terms "a plurality of" and "multiple" mean two or more.

With the improvement of energy density of secondary batteries, there is a demand for light and thin current collectors of electrode plates. Along with the thickness reduction of the current collector, the maximum load that the current collector can bear is sharply declined, and the thickness of the current collector that can be used for plastic deformation is severely reduced, resulting in a significant decrease in the tensile strength and elongation at break of the current collector, making it difficult for the current collector of conventional strength in the prior art to satisfy the use requirements of secondary batteries. The current collector with conventional strength, after thickness reduction, is prone to fatigue and breakage during the late cycle of the secondary battery, resulting in thermal runaway in the cell, and thus causing safety accidents. Therefore, the tensile strength and plasticity (elongation at break) of the current collector need to be effectively enhanced while achieving weight and thickness reduction of the current collector.

In the prior art, metal strengthening techniques typically use common incoherent grain boundaries or phase boundaries to hinder dislocation motions, so as to enhance the strength. When a large number of incoherent grain boundaries are introduced into a material, the strength of the material is significantly enhanced. However, as the number of "obstacles" to dislocation motions continuously increases, the motion of lattice dislocations is severely hindered or even completely suppressed, such that the dislocations cannot coordinate plastic deformation, consequently leading to material embrittlement. As a result, the enhancement of the mechanical properties of metal materials often comes at the expense of plasticity, and the strength of materials with excellent plasticity is often very low.

Based on this, the present application provides a current collector. The current collector includes a copper foil, the average grain size of the grains in the copper foil is 50 nm to 400 nm, and based on the total number of the grains in the copper foil, the number proportion of nanotwinned grains is greater than or equal to 60%.

As used herein, the term "twin" refers to a mirror-symmetry orientation relationship that two crystals (or two parts of a single crystal) possess across a common plane (i.e., a specific orientation relationship); the two crystals are referred to as "twins", and the common plane is referred to as a twin plane. A nanotwin refers to a twin with a size of less than 1000 nanometers in each dimension.

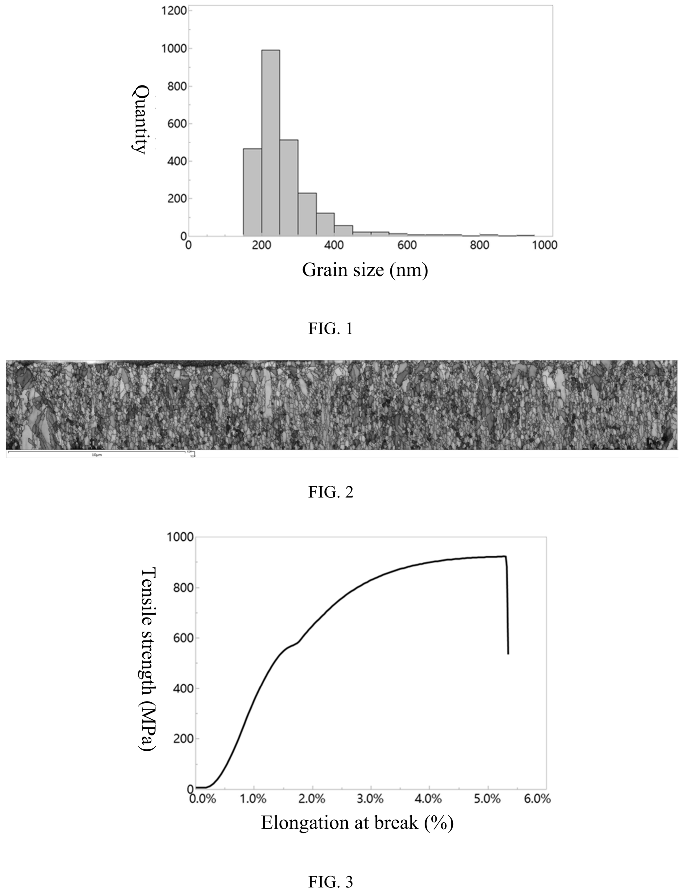

The average grain size of the grains in the copper foil can be measured using a method known in the art. As an example, the cross section of the copper foil is measured by using an electron backscatter diffraction (EBSD) in combination with a scanning electron microscope, and a range of the copper foil of not less than 5 mm $\times$ 5 mm and not greater than 8 mm $\times$ 8 mm is selected to obtain an inverse pole figure map of the copper foil. The average diameter of the equivalent circles of the grains is taken as the grain size, and the grain size of the grains within the range is counted. A number distribution map is made, as shown in FIG. 1, and a skewed distribution is used for fitting. The length corresponding to the peak value is taken as the average grain size of the grains.

In some embodiments, the average grain size of the copper foil is optionally 50 nm, 100 nm, 150 nm, 200 nm, 250 nm, 300 nm, 350 nm, 400 nm, or in a numerical range between any two of the values.

In some embodiments, the average grain size of the grains in the copper foil is 50 nm to 300 nm.

The copper foil with an average grain size within the above range can further enhance the mechanical strength of the copper foil while maintaining its high plasticity, thereby satisfying the use requirements of a new generation of secondary batteries with high energy density.

In some embodiments, based on the total number of the grains in the copper foil, the number proportion of grains with a grain size of less than 200 nm is 20% to 40%, and the number proportion of grains with a grain size of 200 nm to 500 nm is 50% to 80%.

In some embodiments, based on the total number of the grains in the copper foil, the number proportion of grains with a grain size of less than 200 nm is optionally 20%, 24%, 28%, 32%, 36%, 40%, or in a numerical range between any two of the values.

In some embodiments, based on the total number of grains in the copper foil, the number proportion of grains with a grain size of 200 nm to 500 nm is optionally 50%, 55%, 60%, 65%, 70%, 75%, 80%, or in a numerical range between any two of the values.

In some embodiments, based on the total number of the grains in the copper foil, the number proportion of grains with a grain size of greater than 500 nm is less than or equal to 5%, and optionally less than or equal to 2%.

In some embodiments, based on the total number of the grains in the copper foil, the number proportion of grains with a grain size of greater than 500 nm is optionally 0.5%, 1%, 2%, 2.5%, 3%, 3.5%, 4%, 4.5%, 5%, or in a numerical range between any two of the values.

In the copper foil according to the embodiments of the present application, the grains have a small average grain size, the grain size exhibits a skewed distribution, and the number proportion of grains with a grain size of greater than 500 nm is very small. The fine grains reduce the occurrence of stress concentration during the deformation of the copper foil, and are more beneficial to the slip coordination of the grains. Therefore, the elongation at break can be improved while enhancing the strength of the copper foil.

In the present application, the number proportion of nanotwinned grains can be measured using a method known in the art. As an example, the cross section of the copper foil is observed by using EBSD in combination with a scanning electron microscope, and a range of the copper foil of not less than 5 mm $\times$ 5 mm and not greater than 8 mm $\times$ 8 mm is selected to obtain an inverse pole figure map of the copper foil, where different colors represent different grain orientations. Taking FIG. 2 as an example, the red line inside the grain denotes a twin boundary, which represents that the grain has a twinned structure. The size and number of twins can be counted by using analysis software paired with EBSD, and thus the number proportion of nanotwinned grains can be calculated. As an example, the grain characteristics are analyzed by using an Oxford C-Nano + EBSD and its paired software.

In some embodiments, based on the total number of the grains in the copper foil, the number proportion of nanotwinned grains is optionally 60%, 65%, 70%, 75%, 80%, 85%, 90%, 95%, 100%, or in a numerical range between any two of the values.

The twinned structure is an effective means for enhancing the strength and plasticity of the metal. The twin boundary is a coherent interface with orderly arranged atoms, which can maintain the mobility of dislocations while enhancing the strength of the material by increasing the resistance to the dislocation motions, thereby maintaining the plasticity of the material while strengthening the material. In the prior art, microtwins are often introduced into copper foils reinforced in a twinning strengthening manner during preparation, which hinders further enhancement of the strength of the copper foil. The copper foil according to the embodiments of the present application has a high proportion of nanotwins, which significantly enhances the strength of the copper foil while improving the plasticity of the copper foil. The small grain size can further increase the interface structure, raising the applied stress required for dislocations to traverse the grain boundaries, thereby achieving material strengthening. The combination of the high-proportion nanotwinned structure and the small grain size functions to enhance the mechanical strength of the copper foil while maintaining its high plasticity, thereby providing a material basis for further improvement of the energy density and safety of the battery.

As used herein, the term "equiaxed grains or nearly equiaxed grains" refers to grains in which the major axis and the minor axis are of equal length or differ slightly. In some embodiments, the ratio a1 of the length of the major axis to the length of the minor axis of the equiaxed grain or the nearly equiaxed grain satisfies: $1 \leq a1 < 2$.

In some embodiments, based on the total number of the grains in the copper foil, the number proportion of the equiaxed grains or the nearly equiaxed grains is greater than or equal to 80%, and optionally greater than or equal to 90%, and the ratio a1 of the length of the major axis to the length of the minor axis of the equiaxed grain or the nearly equiaxed grain satisfies: $1 \leq a1 < 2$.

In the present application, the number proportion of the equiaxed grains or the nearly equiaxed grains can be measured using a method known in the art. As an example, the cross section of the copper foil is observed by using EBSD in combination with a scanning electron microscope, a range of the copper foil of not less than 5 mm × 5 mm and not greater than 8 mm × 8 mm is selected to obtain an inverse pole figure map of the copper foil, and the number proportion of the equiaxed grains or the nearly equiaxed grains is obtained by using analysis software.

A large number of equiaxed grains or nearly equiaxed grains are beneficial for achieving fineness and uniformity of the grains in the copper foil, and the equiaxed grains or nearly equiaxed grains have the same or similar properties in all directions, which is beneficial for comprehensively enhancing the strength and plasticity of the copper foil.

In some embodiments, based on the total number of the grains in the copper foil, the number proportion of the equiaxed grains or the nearly equiaxed grains is 90%, 91%, 92%, 93%, 94%, 95%, 96%, 97%, 98%, 99%, 100%, or in a numerical range between any two of the values.

In some embodiments, based on the total number of the grains in the copper foil, the number proportion of columnar grains is less than 10%, and the ratio a2 of the length of the major axis to the length of the minor axis of the columnar grain satisfies: a2 > 2.

The formation of the columnar grains tends to result in anisotropy in the mechanical properties of the copper foil. Therefore, reducing the number proportion of the columnar grains is beneficial for enhancing the mechanical strength and plasticity of the copper foil and reducing the formation probability of stress concentration points.

In some embodiments, the direction of the major axis of the columnar grain is the thickness direction of the copper foil.

In some embodiments, the proportion of the plane diffraction intensity of the (111) texture in the copper foil in the sum of plane diffraction intensities of the (111), (200), (220), (311), and (222) textures in the copper foil is greater than or equal to 60%, and optionally 60% to 85%.

As used herein, the term "texture" refers to a phenomenon that during the formation of a crystal, the grains of a polycrystal are arranged in an orderly manner along certain directions, exhibiting a statistical inhomogeneous distribution where more grains are present along certain directions than other directions, i.e., being arranged in an aggregated manner along certain directions, and thus having a significantly increased orientation probability along these directions; the texture is also referred to as preferred orientation.

In the present application, the plane diffraction intensity of the texture in the copper foil can be measured using a method known in the art. As an example, the copper foil is measured by using an X-ray diffractometer. Referring to the X-ray pattern of a standard copper powder (PDF No. 04-0836), the peak area of the diffraction peak located between 40° and 45° is taken as the plane diffraction intensity of the (111) texture, the peak area of the diffraction peak located between 47° and 52° is taken as the plane diffraction intensity of the (200) texture, the peak area of the diffraction peak located between 70° and 75° is taken as the plane diffraction intensity of the (220) texture, the peak area of the diffraction peak located between 85° and 95° is taken as the plane diffraction intensity of the (311) texture, and the peak area of the diffraction peak located between 103° and 107° is taken as the plane diffraction intensity of the (222) texture.

In some embodiments, the proportion of the plane diffraction intensity of the (111) texture in the copper foil in the sum of plane diffraction intensities of the (111), (200), (220), (311), and (222) textures in the copper foil is optionally 60%, 65%, 70%, 75%, 80%, 85%, or in a numerical range between any two of the values.

For pure copper materials, common textures include textures of (111), (200), (220), (311), and (222). Due to the crystallographic characteristics, the (111) plane has a large atomic density and high mechanical strength, which can improve the twinning strengthening effect. A high proportion of (111) texture in the copper foil is beneficial for enhancing the effects of mechanical strengthening and plasticity enhancement of the copper foil.

In some embodiments, the copper foil has a first surface and a second surface that are opposite to each other, the thickness of the copper foil is denoted as H, a region extending from the first surface of the copper foil to a thickness range of 0.2H to 0.5H is defined as a first region of the copper foil, a region extending from the second surface of the copper foil to a thickness range of 0.2H to 0.5H is defined as a second region of the copper foil, and the absolute value of the difference between the average grain size of grains in the first region and the average grain size of grains in the second region is less than or equal to 150 nm.

In some embodiments, the absolute value of the difference between the average grain size of grains in the first region and the average grain size of grains in the second region is 1 nm, 20 nm, 40 nm, 60 nm, 80 nm, 100 nm, 120 nm, 140 nm, 150 nm, or in a numerical range between any two of the values.

The size and structure of the grains in this copper foil also exhibit high uniformity along the thickness direction of the copper foil, indicating that the copper foil achieves uniform deposition in different deposition time periods, and the electroplating solution is not significantly polarized during the deposition process, which provides a basis for the copper foil to maintain high strength and high plasticity while achieving ultrathin thickness.

In some embodiments, based on the total number of the grains in the copper foil, the number proportion of nanotwinned grains is 65% to 90%.

In some embodiments, the maximum surface roughness of the copper foil is less than or equal to 3 $\mu$m.

The maximum surface roughness of the copper foil can reflect the uniformity and smoothness of the surface of the copper foil. The maximum surface roughness of the copper foil can be measured using a method known in the art. For example, a stylus-type roughness tester is used for testing. The surface of the copper foil is wiped with ethanol, and the copper foil is placed on a horizontal plane steadily. The stylus-type roughness tester is placed on the surface of the copper foil, such that the stylus contacts the surface of the copper foil, and the stylus gently traverses across the surface. Then, the roughness of the copper foil is obtained through instrument reading. Measurements are performed five times at different parts of the copper foil, and the maximum value of the readings is taken as the maximum surface roughness of the copper foil.

In some embodiments, the maximum surface roughness of the copper foil is optionally 0.1 $\mu$m, 0.5 $\mu$m, 1 $\mu$m, 1.5 $\mu$m, 2 $\mu$m, 2.5 $\mu$m, 3 $\mu$m, or in a numerical range between any two of the values.

The copper foil with the maximum surface roughness of less than or equal to 3 $\mu$m has a smooth and uniform surface, and it is less prone to the formation of stress concentration points under cyclic loading, which is beneficial for enhancing the mechanical strength and plasticity of the copper foil.

In some embodiments, the thickness H of the copper foil satisfies: 3 $\mu$m $\leq$ H $\leq$ 15 $\mu$m, and optionally 3 $\mu$m $\leq$ H $\leq$ 8 $\mu$m.

In some embodiments, the thickness H of the copper foil is optionally 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, 12 $\mu$m, 13 $\mu$m, 14 $\mu$m, 15 $\mu$m, or in a numerical range between any two of the values.

In the present application, the thickness of the copper foil can be measured using a method known in the art. As an example, a sample with an area of 20 $\times$ 15 cm$^2$ is cut, the cut sample strips are weighed on an electronic balance to obtain the weight of the sample strip, and then the volume of the sample strip is calculated according to the density $\rho$ of 8.96 g/cm$^3$ of the copper foil; the length and the width of the sample strip are known, so the thickness of the sample strip can be calculated.

This copper foil has a low thickness, enabling effective weight reduction of the battery, thereby facilitating further increase of the energy density of the battery.

In some embodiments, under the test conditions of room temperature, a sample thickness of 6 $\pm$ 0.2 $\mu$m, and a tensile speed of 50 $\pm$ 0.5 mm/min, the tensile strength of the copper foil is greater than or equal to 600 MPa, and the elongation at break of the copper foil is greater than or equal to 4%; optionally, the tensile strength of the copper foil is 700 MPa to 1500 Mpa, and further optionally 800 MPa to 1000 Mpa; the elongation at break of the copper foil is 4.5% to 10%, and further optionally 5% to 8%.

As used herein, the term "room temperature" refers to 20 $\pm$ 10 °C.

As used herein, the term "tensile strength" refers to the maximum load bearing strength of a test sample when the test sample is continuously loaded with a tension until it breaks.

As used herein, the term "elongation at break" refers to the ratio of the length change of a material after being subjected to a force and plastic deformation until it breaks to an original length, and is usually expressed as a percentage, which is an important parameter for measuring the deformation capacity of the material when being subjected to a stress during a stretching process.

In the present application, the tensile strength and the elongation at break of the copper foil can be measured using a method known in the art, and for example, measurement is performed according to GB/T 5230-1995 "Electrodeposited Copper Foil". As an example, at least four test samples having a length of 200 $\pm$ 0.5 mm, a width of 15 $\pm$ 0.25 mm, and a thickness of 6 $\pm$ 0.2 $\mu$m are cut and continuously loaded with a tension at room temperature and at a tensile speed of 50 $\pm$ 0.5 mm/min until they break, and the tensile strength of the test sample is obtained by dividing the maximum load by the cross-sectional area of the test sample. The cross-sectional area of the test sample can be calculated by dividing the mass of the test sample by the product of the length and the density of the test sample, and the density of the copper foil sample may be 8.9 g/cm$^3$.

In some embodiments, under the test conditions of room temperature, the sample thickness of 6 um $\pm$ 0.2 $\mu$m, and the tensile speed of 50 $\pm$ 0.5 mm/min, the tensile strength of the copper foil is optionally 600 MPa, 700 MPa, 800 MPa, 900 MPa, 1000 MPa, 1100 MPa, 1200 MPa, 1300 MPa, 1400 MPa, 1500 MPa, or in a numerical range between any two of the values; the elongation at break of the copper foil is optionally 4%, 4.5%, 5%, 6%, 7%, 8%, 9%, 10%, or in a numerical range between any two of the values.

The above copper foil has both high strength and high plasticity, which can satisfy the use requirements of batteries with high energy density, and improve the safety of the battery while increasing the energy density of the battery.

The present application further provides a preparation method for a copper foil. The copper foil is prepared by using an electroplating method. The electroplating method specifically includes periodically applying a current to an electroplating solution, such that the copper ions in the electroplating solution are reduced and deposited to form a copper foil; the average grain size of grains in the copper foil is 50 nm to 400 nm, and based on the total number of the grains in the copper foil, the number proportion of nanotwinned grains is greater than or equal to 60%, and optionally greater than or equal to 65%.

As used herein, the term "electroplating method" refers to a method of forming a metal layer by depositing a metal or alloy onto the surface of a workpiece by using the principle of electrolysis.

In some embodiments, the current is a pulse current, and the pulse current includes one or more of a square wave pulse current, a sinusoidal wave pulse current, a triangular wave pulse current, and a sawtooth wave pulse current.

In some embodiments, the pulse current includes a square wave pulse current.

As used herein, the term "pulse current" refers to a current or voltage pulse that occurs periodically.

By applying the pulse current to the electroplating solution, the processes of nucleation of reduced copper ions and grain growth can be controlled by the on and off of the current, thereby inhibiting the grain growth to form uniform nanograins, so as to enhance the tensile strength and elongation at break of the copper foil. Compared with the direct current electrodeposition commonly used in the prior art, the pulse current electrodeposition can achieve a higher peak current density, which is beneficial to extensive nucleation of copper foil, thereby increasing the density of the copper foil and reducing the grain size of the copper foil, so as to enhance the mechanical strength of the copper foil.

In some embodiments, the electroplating solution includes copper ions and chloride ions.

In some embodiments, the concentration of the copper ions in the electroplating solution is 30 g/L to 100 g/L, and optionally 45 g/L to 75 g/L.

In some embodiments, the concentration of the copper ions in the electroplating solution is 30 g/L, 40 g/L, 50 g/L, 60 g/L, 70 g/L, 80 g/L, 90 g/L, 100 g/L, or in a numerical range between any two of the values.

The research results show that compared with the combination of high copper ion concentration and low additive concentration, the combination of low copper ion concentration and high additive concentration is more beneficial for comprehensively enhancing the strength and elongation at break of the copper foil. In addition, the low copper ion concentration can help control the growth and deposition speeds of the grains, facilitating the preparation of small-sized grains, thereby enhancing the mechanical strength of the copper foil.

In some embodiments, the concentration of chloride ions is 10 mg/L to 80 mg/L.

In some embodiments, the concentration of chloride ions is 10 mg/L, 20 mg/L, 30 mg/L, 40 mg/L, 50 mg/L, 60 mg/L, 70 mg/L, 80 mg/L, or in a numerical range between any two of the values.

In some embodiments, the electroplating solution further includes an additive, and the additive includes one or more of a leveling agent, a wetting agent, and a brightener.

As used herein, the term "leveling agent" refers to a substance added to the electroplating solution that can improve the flatness of a plating layer.

As used herein, the term "wetting agent" refers to a substance used to reduce the interfacial tension between the electroplating solution and the electrode, enabling better adhesion of the plating layer to the substrate.

As used herein, the term "brightener" refers to a substance that increases the smoothness of the plating layer and reduces the surface roughness.

The leveling agent can adhere to tips of the copper foil where deposition rate is high, inhibit grain growth, balance the growth rates of pits and the tips, and improve the flatness of the copper foil. The wetting agent can improve the wettability between the electroplating solution and the substrate, and the wettability of the electroplating solution on the cathode is sufficient to achieve rapid electrodeposition in cooperation with a high current, thereby improving the nucleation rate of the copper foil and reducing the average grain size of the grains in the copper foil. The brightener can make the grain size of the copper foil smaller, and reduce the surface roughness of the copper foil, thereby improving the surface smoothness.

In some embodiments, the additive includes the leveling agent, the wetting agent, and the brightener.

The research results show that the simultaneous addition of various additives can produce a synergistic effect, thereby effectively enhancing the strength and plasticity of the copper foil.

In some embodiments, the leveling agent includes one or more of gelatin and Janus green, the wetting agent includes one or more of hydroxyethyl cellulose and polyethylene glycol, and the brightener includes one or more of bis-(sodium sulfopropyl)-disulfide, sodium 3-mercapto-1-propanesulfonate, and thiourea.

In some embodiments, the wetting agent includes hydroxyethyl cellulose and polyethylene glycol.

The research results show that compared with adding a single type of wetting agent, simultaneously adding two different wetting agents can more effectively enhance the mechanical strength of the copper foil. Although the mechanism is not clear, it is speculated that the mechanism may be related to competitive adsorption between the two different types of additives, which is beneficial for improving the consistency of the grains during the deposition process, and reducing the difference in the grain size along the thickness direction, thereby enhancing the uniformity of the copper foil.

In some embodiments, the concentration of the leveling agent in the electroplating solution is 20 mg/L to 300 mg/L, and optionally 50 mg/L to 150 mg/L.

In some embodiments, the concentration of the leveling agent in the electroplating solution is 20 mg/L, 50 mg/L, 100 mg/L, 150 mg/L, 200 mg/L, 250 g/L, 300 mg/L, or in a numerical range between any two of the values.

In some embodiments, the concentration of the wetting agent in the electroplating solution is 10 mg/L to 200 mg/L, and optionally 30 mg/L to 100 mg/L.

In some embodiments, the concentration of the wetting agent in the electroplating solution is 10 mg/L, 30 mg/L, 50 mg/L, 80 mg/L, 100 mg/L, 130 mg/L, 150 mg/L, 180 mg/L, 200 mg/L, or in a numerical range between any two of the values.

In some embodiments, the concentration of the brightener in the electroplating solution is 10 mg/L to 200 mg/L.

In some embodiments, the concentration of the brightener in the electroplating solution is 10 mg/L, 20 mg/L, 30 mg/L, 40 mg/L, 50 mg/L, 60 mg/L, 70 mg/L, 80 mg/L, 90 mg/L, 100 mg/L, 110 mg/L, 120 mg/L, 130 mg/L, 140 mg/L, 150 mg/L, 160 mg/L, 170 mg/L, 180 mg/L, 190 mg/L, 200 mg/L, or in a numerical range between any two of the values.

In some embodiments, the pH of the electroplating solution is 2.5 to 4.4.

In some embodiments, the pH of the electroplating solution is 2.5, 2.7, 2.9, 3.1, 3.3, 3.5, 3.7, 3.9, 4.1, 4.4, or in a numerical range between any two of the values.

In some embodiments, the mass concentration ratio of the copper ions to the leveling agent is 500:1 to 4500:1; and/or the mass concentration ratio of the copper ions to the brightener is 300:1 to 6000:1.

In some embodiments, the mass concentration ratio of the copper ions to the leveling agent is optionally 500:1, 1000:1, 1500:1, 2000:1, 2500:1, 3000:1, 3500:1, 4000:1, 4500:1, or in a numerical range between any two of the values.

In some embodiments, the mass concentration ratio of the copper ions to the brightener is optionally 300:1, 1000:1, 2000:1, 3000:1, 4000:1, 5000:1, 6000:1, or in a numerical range between any two of the values.

In some embodiments, the electroplating solution includes gelatin with a concentration of 20 mg/L to 150 mg/L, polyethylene glycol with a concentration of 15 mg/L to 100 mg/L, hydroxyethyl cellulose with a concentration of 10 mg/L to 80 mg/L, bis-(sodium sulfopropyl)-disulfide with a concentration of 15 mg/L to 150 mg/L, copper ions with a concentration of 45 g/L to 90 g/L, and chloride ions with a concentration of 10 mg/L to 80 mg/L.

In some embodiments, the peak current density of the pulse current is represented by I, with a unit of $A/dm^2$, a current duty cycle of the pulse current is represented by s, and the peak current density I and the duty cycle s satisfy: $2\ A/dm^2 \le I \times s \le 18\ A/dm^2$.

As used herein, the term "current duty cycle of pulse current" refers to the ratio of the current on-time in the pulse current to the entire pulse period.

In some embodiments, the product $I \times s$ of the peak current density I and the duty cycle s is $2\ A/dm^2$, $4\ A/dm^2$, $6\ A/dm^2$, $8\ A/dm^2$, $10\ A/dm^2$, $12\ A/dm^2$, $14\ A/dm^2$, $16\ A/dm^2$, $18\ A/dm^2$, or in a numerical range between any two of the values.

The product of the peak current density I and the duty cycle s is equivalent to the average density of the current over the pulse period. In the pulse current electrodeposition manner, the average density of the current over the pulse period is enabled to be higher than the maximum current density that can be achieved during direct current electrodeposition, because an excessively high direct current electrodeposition density causes hydrogen evolution and concentration polarization in the electroplating solution, resulting in a reduction in the uniformity of the copper foil during the electrodeposition process. The product of the peak current density I and the duty cycle s within the above range enables dynamic balance between consumption and supplementation of copper ions in the electroplating solution by controlling the on and off of the current, and reduces the concentration difference between a copper ion deposition site and another site in the electroplating solution, such that there is no significant concentration polarization in the electroplating solution, thereby enhancing the uniformity of the grain size along the thickness direction of the prepared copper foil. In addition, the product of the peak current density I and the duty cycle s within the above range can control the nucleation and growth rate of the grains, achieving the preparation of small-sized grains, thereby enhancing the mechanical strength of the copper foil.

In some embodiments, the peak current density I of the pulse current satisfies: $3.3\ A/dm^2 \le I \le 333\ A/dm^{22}$.

In some embodiments, the peak current density I of the pulse current is 3.3 A/dm$^2$, 8.35 A/dm$^2$, 10 A/dm$^2$, 100 A/dm$^2$, 150 A/dm$^2$, 167 A/dm$^2$, 180 A/dm$^2$, 200 A/dm$^2$, 300 A/dm$^2$, 333 A/dm$^2$, or in a numerical range between any two of the values.

In some embodiments, the duty cycle s of the pulse current is 2% to 50%.

In some embodiments, the duty cycle s of the pulse current is 2%, 3.30%, 5%, 10%, 20%, 30%, 40%, 50%, or in a numerical range between any two of the values.

In some embodiments, the pulse width of the pulse current is 1 ms to 50 ms.

As used herein, the term "pulse width" refers to the duration of the current during a pulse period.

In some embodiments, the pulse width of the pulse current is 1 ms, 5 ms, 10 ms, 15 ms, 20 ms, 25 ms, 30 ms, 35 ms, 40 ms, 45 ms, 50 ms, or in a numerical range between any two of the values.

In some embodiments, the distance between the cathode electrode and the anode electrode is 15 mm to 20 mm.

In some embodiments, the distance between the cathode electrode and the anode electrode is 15 mm, 16 mm, 17 mm, 18 mm, 19 mm, 20 mm, or in a numerical range between any two of the values.

In some embodiments, the temperature of the deposition is 45 °C to 60 °C.

In some embodiments, the temperature of the deposition is optionally 45 °C, 50 °C, 55 °C, 60 °C, or in a numerical range between any two of the values.

In some embodiments, the cathode electrode is a titanium roller or a titanium plate.

In some embodiments, the anode electrode is a titanium substrate plate.

In some embodiments, the duration of the deposition is greater than or equal to 80 s.

In some embodiments, the duration of the deposition is optionally 80 s, 100 s, 200 s, 220 s, 240 s, 280 s, 300 s, 400 s, 500 s, 800 s, 1000 s, or in a numerical range between any two of the values.

In some embodiments, the electroplating method specifically includes periodically applying the pulse current to the electroplating solution, such that the copper ions in the electroplating solution are reduced and deposited, where the peak current density I of the pulse current satisfies 100 A/dm$^2 \leq I \leq$ 180 A/dm$^2$, the duty cycle s of the pulse current satisfies 2% $\leq s \leq$ 10%, and the duration of the deposition is 80 s to 250 s.

In some embodiments, the preparation method is a continuous production method.

In some embodiments, the preparation method is a roller deposition method. The working principle is that the cathode roller is connected to the negative electrode of the power source, and the anode tank is connected to the positive electrode of the power source. After the electroplating solution containing the copper ions enters the anode tank, an electric field is formed between the positive electrode and the negative electrode. Under the action of the electric field, the copper ions migrate to the surface of the cathode roller and deposit, and the deposited copper foil is peeled off from the cathode roller and wound on another roller. The electroplating solution is continuously added and circulated, and the copper ions are continuously deposited on the cathode roller, continuously peeled off, and wound on a winding shaft under the action of the electric field. The preparation method can realize continuous production of the copper foil to a large extent, thereby providing a possibility for industrial application.

The present application further provides a copper foil. The copper foil includes the same features as the copper foil in the foregoing current collector, and the details are not described herein again.

In any embodiment, the copper foil is prepared by the preparation method according to any one of the above embodiments.

In some embodiments, the maximum width of the copper foil is greater than or equal to 1.5 meters, and/or the maximum length of the copper foil is greater than or equal to 10,000 meters.

In some embodiments, the maximum width of the copper foil is 1.5 meters, 2 meters, 2.5 meters, 3 meters, 3.5 meters, 4 meters, 6 meters, 8 meters, 10 meters, or in a numerical range between any two of the values.

In some embodiments, the maximum length of the copper foil is 10,000 meters, 15,000 meters, 20,000 meters, 25,000 meters, 30,000 meters, 60,000 meters, 100,000 meters, or in a numerical range between any two of the values.

The copper foil according to the embodiments of the present application can be manufactured in a large size, and thus has the prospect of industrial application.

**Electrode Plate**

The present application further provides an electrode plate, and the electrode plate includes the current collector according to any embodiment.

In some embodiments, the electrode plate is a negative electrode plate, and the current collector is a negative electrode current collector.

In some embodiments, the negative electrode plate includes a negative electrode current collector and a negative electrode film layer disposed on at least one surface of the negative electrode current collector. For example, the negative electrode current collector is provided with two surfaces opposite to each other in its own thickness direction, and the negative electrode film layer is disposed on any one or both of the two opposite surfaces of the negative electrode current collector.

In some embodiments, the negative electrode film layer includes a negative electrode active material. In some embodiments, the negative electrode active material includes, but is not limited to, one or more of conventional natural graphite, artificial graphite, soft carbon, hard carbon, a silicon-based material, a tin-based material, and lithium titanate. The silicon-based material may include one or more of elemental silicon, an oxide of silicon, a silicon-carbon composite, a silicon-nitrogen composite, and a silicon alloy material. The tin-based material may include one or more of elemental tin, an oxide of tin, and a tin alloy material.

In some embodiments, the electrode plate is a negative electrode plate, and the negative electrode plate includes a current collector and a negative electrode film layer disposed on at least one side of the negative electrode current collector. The negative electrode film layer includes a negative electrode active material, the negative electrode active material includes a silicon-based material, and the tensile elongation at break of the negative electrode plate at room temperature is greater than or equal to 2%, optionally 3% to 5%.

As used herein, the term "room temperature" refers to 20 ± 10 °C.

As used herein, the term "tensile elongation at break" refers to the ratio of the length change of a material after being subjected to a force and deformation until it breaks to an original length, and is usually expressed as a percentage, which is an important parameter for measuring the deformation capacity of the material when being subjected to a stress in a stretching process.

The tensile elongation at break of the negative electrode plate can be measured using methods known in the art. As an example, at least 4 test samples with a length of 200 ± 0.5 mm and a width of 15 ± 0.25 mm are cut from the negative electrode plate. Pneumatic chucks are used, and the air pressure is set to 0.2 MPa. The electrode plate is passed through the upper and lower chucks, and the upper chuck is clamped first by stepping on the air valve for clamping. The weak connection state is maintained (i.e., the natural bending state of the test sample is maintained, and external force is not allowed to be applied), and then the lower chuck is clamped. The test sample is continuously loaded with a tension at a tensile speed of 2 mm/min until it breaks, with a gauge length of 50 mm. The tensile elongation at break of the negative electrode plate is obtained by dividing the extension length between the gauge lengths when the sample undergoes tensile break by the length between the gauge lengths before sample stretching.

In some embodiments, the tensile elongation at break of the negative electrode plate at room temperature is optionally 2%, 2.5%, 3%, 3.5%, 4%, 4.5%, 5%, or in a numerical range between any two of the values.

In some embodiments, the negative electrode plate has a thickness of 100 $\mu$m to 150 $\mu$m, which is directly measured by using a micrometer.

The negative electrode plate of the secondary battery has a high tensile elongation at break, such that the negative electrode plate has a sufficient elongation space during the later cycling process of the secondary battery and can withstand reciprocating expansion of the secondary battery during cycling, thereby allowing the safety performance and the cycle life of the secondary battery containing the silicon-based material to be synchronously improved while maintaining a high energy density.

In some embodiments, the compaction density of the negative electrode plate is greater than or equal to 1.5 g/cm$^3$, and the cold-pressing elongation of the negative electrode plate is less than or equal to 0.1%, optionally 0.06% to 0.1%.

In the present application, the compaction density of the negative electrode plate has a meaning well known in the art and can be measured using methods known in the art. The compaction density of the negative electrode plate = the areal density of the negative electrode film layer/the thickness of the negative electrode film layer. The thickness of the negative electrode film layer has a meaning well known in the art and can be measured using methods known in the art, for example, using a micrometer (e.g., Mitutoyo293-100, with precision of 0.1 $\mu$m). The areal density of the negative electrode film layer can be measured using methods known in the art. For example, a cold-pressed negative electrode plate or a negative electrode plate obtained by disassembling a battery (if the negative electrode plate is double-sided, the negative electrode film layer on one side may be wiped off first) may be taken. The plate is punched into small circular discs with an area of S1, and its weight is measured and recorded as M1. Then, the negative electrode film layer of the above weighed negative electrode plate is wiped off, and the weight of the negative electrode current collector is measured and recorded as M0. The areal density of the negative electrode plate = (M1 - M0)/S1.

In some embodiments, the compaction density of the negative electrode plate is optionally 1.5 g/cm$^3$, 1.55 g/cm$^3$, 1.6 g/cm$^3$, 1.65 g/cm$^3$, 1.7 g/cm$^3$, 1.75 g/cm$^3$, 1.8 g/cm$^3$, 1.85 g/cm$^3$, 1.9 g/cm$^3$, 1.95 g/cm$^3$, 2.0 g/cm$^3$, or in a numerical range between any two of the values.

The cold-pressing elongation of the negative electrode plate can be measured using methods known in the art. As an example, two points are taken on the surface of the negative electrode plate before cold pressing along the (MD) direction perpendicular to the cold pressing roller, and the distance L1 therebetween is measured; the distance L2 between the two points is measured on the negative electrode plate after cold pressing, and (L2 - L1)/L1 is taken as the cold-pressing elongation of the negative electrode plate. At least five different sites are measured, and the average value is taken as the cold-pressing elongation of the negative electrode plate. It should be understood that the cold-pressing elongation of the negative electrode plate can also be obtained by characterizing the disassembled secondary battery. As an example, the secondary battery is disassembled to obtain a negative electrode plate, and the difference between the elongation at break of the current collector in the region covered by the negative electrode film layer and the elongation at break of the current collector in the empty foil region is measured. This difference may also be used to characterize the cold-pressing elongation of the negative electrode plate.

In some embodiments, the cold-pressing elongation of the negative electrode plate is optionally 0.01%, 0.02%, 0.03%, 0.04%, 0.05%, 0.06%, 0.07%, 0.08%, 0.09%, 0.1%, or in a numerical range between any two of the values.

The negative electrode plate of the secondary battery exhibits a low elongation in the cold pressing process while achieving a high compaction density, which reserves more available space for the expansion of the electrode plate during the cycling process of the secondary battery, thereby being beneficial for further improving the safety and cycle life of the secondary battery. Moreover, the low cold-pressing elongation can reduce the risk of wrinkling at the tab portion of the negative electrode plate during cold pressing of the electrode plate, and can even eliminate the need for the pre-elongation process currently used to reduce the probability of wrinkling of the tab during cold pressing, thereby improving the production efficiency.

In some embodiments, the compaction density of the negative electrode plate is 1.5 g/cm$^3$ to 2.0 g/cm$^3$.

Compared with a carbon-based active material commonly used for the negative electrode, the silicon-based material exhibits higher hardness and relatively poor slippability, such that greater cold pressing pressure is required to achieve the same compaction density. The silicon-containing negative electrode of the secondary battery exhibits high elongation resistance and can achieve high compaction density, thereby further improving the energy density of the secondary battery while improving the safety and service life of the battery.

In some embodiments, based on the total mass of the negative electrode film layer, the mass content of the silicon-based material is 5% to 100%.

In some embodiments, based on the total mass of the negative electrode film layer, the mass content of the silicon-based material is optionally 5%, 10%, 15%, 20%, 25%, 30%, 35%, 40%, 45%, 50%, 55%, 60%, 65%, 70%, 75%, 80%, 85%, 90%, 95%, 100%, or in a numerical range between any two of the values.

In some embodiments, based on the total mass of the negative electrode film layer, the mass content of the silicon-based material is 10% to 60%.

The silicon-based material within the above content range enables the secondary battery to possess good energy density, safety, and cycling stability.

In some embodiments, the thickness of the current collector is 2 $\mu$m to 10 $\mu$m.

In some embodiments, the thickness of the current collector is optionally 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, or in a numerical range between any two of the values. The thickness of the current collector can be measured using any method well known in the art. As an example, the thickness of the current collector can be measured and obtained using a thickness gauge. Alternatively, the current collector may be punched into small circular discs, and after weighing, the areal density of the sample is obtained by dividing the mass of the sample by the surface area of the sample. The thickness of the current collector is calculated by dividing the areal density of the sample by the density of the current collector material (for example, if the current collector is a copper foil, the density of the current collector is 8.9 g/cm$^3$). The density of the current collector material can be characterized and tested using a composition tester.

In some embodiments, the negative electrode film layer further optionally includes a negative electrode conductive agent. The present application does not particularly limit the type of the negative electrode conductive agent. As an example, the negative electrode conductive agent may include one or more of superconducting carbon, conductive graphite, acetylene black, carbon black, Ketjen black, a carbon dot, a carbon nanotube, graphene, and a carbon nanofiber.

In some embodiments, the negative electrode film layer further optionally includes a negative electrode binder. The present application does not particularly limit the type of the negative electrode binder. As an example, the negative electrode binder may include one or more of styrene-butadiene rubber (SBR), water-soluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS).

In some embodiments, the negative electrode film layer further optionally includes other auxiliary agents. As an example, other auxiliary agents may include thickeners, such as sodium carboxymethylcellulose (CMC) and PTC thermistor materials.

The negative electrode film layer is generally formed by coating a negative electrode current collector with a negative electrode slurry, drying, and cold pressing. The negative electrode slurry is generally formed by dispersing a negative electrode active material, an optional conductive agent, an optional binder, and other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate of the present application further includes a conductive bottom coating (e.g., composed of a conductive agent and a binder) disposed on the surface of the negative electrode current collector and positioned between the negative electrode current collector and the negative electrode film layer; in some embodiments, the negative electrode plate of the present application further includes a protective layer covering the surface of the negative electrode film layer.

**Secondary Battery**

The present application further provides a secondary battery. The secondary battery may optionally be in the form of a battery cell, a battery module, or a battery pack.

In some embodiments, the maximum expansion force of the secondary battery cell is greater than or equal to 1000 kgf.

In some embodiments, the maximum expansion force of the secondary battery cell is greater than or equal to 2500 kgf.

In some embodiments, the maximum expansion force of the secondary battery cell is greater than or equal to 4000 kgf.

1 kgf refers to the gravitational force exerted on a 1-kilogram object at sea level at 45 degrees north latitude. 1 kgf is about 9.8 Newtons. The expansion force of the secondary battery cell is sensed by pressure sensors disposed in clamping fixtures on both sides of the large surface of the electrode plate of the secondary battery cell.

The current collector in the prior art is prone to breakage under a high expansion force of the secondary battery, which causes safety accidents and limits further improvement of the electrochemical performance of the secondary battery. The current collector according to the embodiments of the present application has both excellent tensile strength and elongation at break, and thus can be applied to a secondary battery with a high expansion force, which is beneficial for further increasing the energy density of the secondary battery.

The type of the secondary battery is not particularly limited in the present application. For example, the secondary battery may be a lithium-ion battery, or the like. Typically, a secondary battery includes a positive electrode plate, a negative electrode plate, and an electrolyte. During the charging and discharging process of the secondary battery, active ions are intercalated and deintercalated back and forth between the positive electrode plate and the negative electrode plate, and the electrolyte plays a role in conducting the active ions between the positive electrode plate and the negative electrode plate. The type of the electrolyte is not particularly limited in the present application, and a choice can be made as needed in practice. For example, the electrolyte may be selected from at least one of a solid-state electrolyte and a liquid-state electrolyte (i.e., an electrolytic solution). Secondary batteries using an electrolytic solution and some secondary batteries using a solid-state electrolyte may further include a separator. The separator is disposed between the positive electrode plate and the negative electrode plate to perform a function of isolation.

[Positive Electrode Plate]

In some embodiments, the positive electrode plate includes a positive electrode current collector and a positive electrode film layer disposed on at least one surface of the positive electrode current collector. For example, the positive electrode current collector is provided with two surfaces opposite to each other in its own thickness direction, and the positive electrode film layer is disposed on any one or both of the two opposite surfaces of the positive electrode current collector.

A metal foil or a composite current collector may be used as the positive electrode current collector. As an example of the metal foil, a copper foil may be used. The composite current collector may include a polymer material base layer and a metal material layer formed on at least one surface of the polymer material base layer. As an example, the metal material may include one or more of aluminum, an aluminum alloy, nickel, a nickel alloy, titanium, a titanium alloy, silver, and a silver alloy. As an example, the polymer material base layer may include one or more of polypropylene (PP), polyethylene terephthalate (PET), polybutylene terephthalate (PBT), polystyrene (PS), and polyethylene (PE).

The positive electrode film layer generally includes a positive electrode active material, an optional binder, and an optional conductive agent. The positive electrode film layer is generally formed by coating a positive electrode current collector with a positive electrode slurry, drying, and cold pressing. The positive electrode slurry is generally formed by dispersing a positive electrode active material, an optional conductive agent, an optional binder, and any other components in a solvent and stirring them uniformly. The solvent may be N-methylpyrrolidone (NMP), but is not limited thereto. As an example, the binder for use in the positive electrode film layer may include one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylic resin. As an example, the conductive agent for use in the positive electrode film layer includes one or more of superconducting carbon, conductive graphite, acetylene black, carbon black, Ketjen black, a carbon dot, a carbon nanotube, graphene, and a carbon nanofiber.

The positive electrode active material may be a positive electrode active material well-known in the art for use in secondary batteries.

When the secondary battery of the present application is a lithium-ion battery, the positive electrode active material the positive electrode active material may include, but is not limited to, one or more of a lithium-containing transition metal oxide, a lithium-containing phosphate, and respective modified compounds thereof. Examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, in order to further improve the energy density of the secondary battery, the positive electrode active material of the lithium-ion battery may include one or more of lithium transition metal oxides with a general formula $Li_aNi_bCo_cM_dO_eA_f$ and modified compounds thereof, where $0.8 \le a \le 1.2$, $0.5 \le b < 1$, $0 < c < 1$, $0 < d < 1$, $1 \le e \le 2$, $0 \le f \le 1$, M is selected from one or more of Mn, Al, Zr, Zn, Cu, Cr, Mg, Fe, V, Ti, and B, and A is selected from one or more of N, F, S, and Cl.

In some embodiments, as an example, the positive electrode active material of the lithium-ion battery may include at least one or more of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

In the present application, the modified compounds of the above positive electrode active materials may be obtained by doping modification and/or surface-coating modification of the positive electrode active materials.

[Electrolyte]

In some embodiments, the electrolyte is an electrolytic solution, where the electrolytic solution includes an electrolyte salt and a solvent.

The types of the electrolyte salt are not particularly limited, and a choice can be made as needed in practice.

When the secondary battery of the present application is a lithium-ion battery, as an example, the electrolyte salt may include one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate ($LiPO_2F_2$), lithium difluorobis(oxalato)phosphate (LiDFOP), and lithium tetrafluoro(oxalato)phosphate (LiTFOP).

The types of the solvent are not particularly limited, and a choice can be made as needed in practice. In some embodiments, as an example, the solvent may include one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), and diethyl sulfone (ESE).

In some embodiments, the electrolytic solution further optionally includes an additive. For example, the additive may include a negative electrode film-forming additive or a positive electrode film-forming additive, or may include an additive capable of improving certain properties of the secondary battery, such as an additive for improving the overcharge performance of the secondary battery, an additive for improving the high-temperature performance of the secondary battery, or an additive for improving the low-temperature power performance of the secondary battery.

[Separator]

The present application does not particularly limit the type of the separator, and any porous-structure separator known to have good chemical stability and mechanical stability may be selected.

In some embodiments, the material of the separator may include one or more of glass fiber, non-woven fabric, polyethylene, polypropylene, and polyvinylidene fluoride. The separator may be a single-layer film or a multi-layer composite film. When the separator is a multi-layer composite film, the materials of the layers are the same or different.

In some embodiments, the positive electrode plate, the separator, and the negative electrode plate may be manufactured into an electrode assembly through a winding process or a stacking process.

In some embodiments, the secondary battery may include an outer packaging. The outer packaging can be used for packaging the electrode assembly and electrolyte described above.

In some embodiments, the outer packaging may be a hard shell, such as a hard plastic shell, an aluminum shell, or a steel shell. The outer packaging may also be a soft pack, such as a pouch-type soft pack. The soft pack may be made of plastic, such as one or more of polypropylene (PP), polybutylene terephthalate (PBT), and polybutylene succinate (PBS).

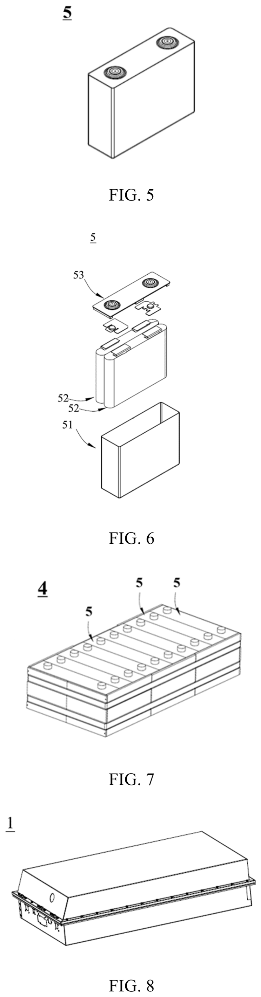

The present application does not particularly limit the shape of the secondary battery, and it may have a cylindrical shape, a prismatic shape, or any other shape. FIG. 5 shows a secondary battery 5 having a prismatic structure as one example.

In some embodiments, as shown in FIG. 6, the outer packaging may include a housing 51 and a cover plate 53. The housing 51 may include a bottom plate and side plates connected to the bottom plate. The bottom plate and the side plates define, in an enclosing manner, an accommodating cavity. The housing 51 is provided with an opening communicating with the accommodating cavity, and the cover plate 53 is configured to lid the opening to close the accommodating cavity. The positive electrode plate, the negative electrode plate, and the separator may be subjected to a winding process or a stacking process to form an electrode assembly 52. The electrode assembly 52 is packaged in the accommodating cavity. The electrolytic solution is infiltrated into the electrode assembly 52. The number of electrode assemblies 52 included in the secondary battery 5 may be one or more and may be adjusted as needed.

The preparation method for the secondary battery in the present application is well known. In some embodiments, a positive electrode plate, a separator, a negative electrode plate, and an electrolytic solution may be assembled to form a secondary battery. As an example, the positive electrode plate, the separator, and the negative electrode plate may form an electrode assembly through a winding process or a stacking process. The electrode assembly is placed in an outer packaging, dried, and then injected with electrolytic solution. After undergoing processes such as vacuum packaging, standing, formation, and shaping, a secondary battery is obtained.

In some embodiments of the present application, the secondary battery according to the present application may be assembled into a battery module. The number of secondary batteries included in the battery module may be plural, and the specific number may be adjusted according to the application and capacity of the battery module.

FIG. 7 is a schematic diagram of a battery module 4 as one example. As shown in FIG. 7, in the battery module 4, a plurality of secondary batteries 5 may be sequentially arranged in the length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the above battery module may further be assembled into a battery pack; the number of the battery modules included in the battery pack may be adjusted based on the application and capacity of the battery pack.

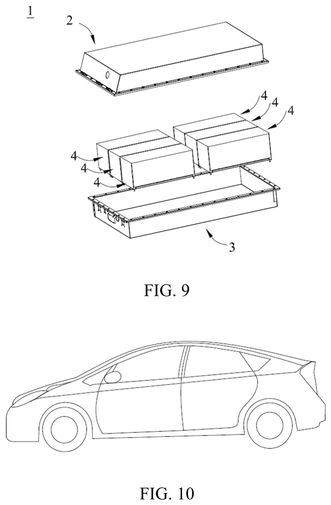

FIGs. 8 and 9 are schematic diagrams of a battery pack 1 as one example. As shown in FIGs. 8 and 9, the battery pack 1 may include a battery case and a plurality of battery modules 4 arranged in the battery case. The battery case includes an upper case body 2 and a lower case body 3. The upper case body 2 is configured to lid the lower case body 3 and the two form a closed space for accommodating the battery modules 4. The plurality of battery modules 4 may be arranged in any manner in the battery case.

## Electric Device

The present application further provides an electric device. The electric device includes at least one of the secondary battery, the battery module, or the battery pack according to the present application. The secondary battery, the battery module, or the battery pack may be used as a power source for the electric device, and they may also be used as an energy storage unit for the electric device. The electric device may be, but is not limited to, a mobile device (e.g., a mobile phone, a tablet computer, or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

A secondary battery, a battery module, or a battery pack may be selected based on the use requirements of the electric device.

FIG. 10 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, a battery pack or a battery module may be used.

As another example, the electric device may be a mobile phone, a tablet computer, a laptop computer, or the like. The electric device is generally required to be light and thin, and a secondary battery may thus be used as the power source.

## Examples

The following examples more specifically describe the content disclosed in the present application. These examples are intended for illustrative purposes only, since various modifications and changes within the scope of the content disclosed in the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

**Example 1**

(1) Preparation of Copper Foil

A copper plate or copper wire with a purity of 99.9% or more was dissolved in a sulfuric acid solution to prepare a copper sulfate pentahydrate solution, which was used as a copper source. Additives and oxalic acid were added to prepare an electroplating solution at 60 °C. The additives include gelatin, polyethylene glycol, hydroxyethyl cellulose, and sodium chloride. The pH of the electroplating solution was 3.5, where the concentrations of its respective components were as follows: the concentration of copper ions was 45 g/L; the concentration of gelatin was 90 mg/L; the concentration of polyethylene glycol was 50 mg/L; the concentration of hydroxyethyl cellulose was 30 mg/L; the concentration of chloride ions was 80 mg/L; the concentration of bis-(sodium sulfopropyl)-disulfide was 75 mg/L, and the rest was deionized water.
A square wave pulse current waveform was used to periodically apply a current to a polished cathode titanium roller. The area of the titanium roller located in the electroplating solution was $0.3\,dm^2$, and the rotation speed of the titanium roller was 2 m/min. The pulse current was applied with a current density of $167\,A/dm^2$, a duty cycle of 5%, and a pulse width of 1 ms. The distance between the cathode and the anode was 20 mm, and the temperature of deposition was 60 °C. The electroplating duration was 224 s, and a copper foil was deposited on the titanium roller with a copper foil thickness of 6 $\mu$m.

(2) Preparation of Battery

A positive electrode active material ($LiNi_{0.8}Co_{0.1}Mn_{0.1}O_2$ (NCM811)), a conductive agent acetylene black, and a binder polyvinylidene fluoride (PVDF) were dissolved according to a weight ratio of 90:5:5 in a solvent N-methylpyrrolidone (NMP), and thoroughly stirred and uniformly mixed to obtain a positive electrode slurry. Then, a positive electrode current collector was uniformly coated with the positive electrode slurry, and the coated positive electrode current collector was subjected to drying, cold pressing, and slitting to obtain a positive electrode plate.
A negative electrode active substance artificial graphite, the conductive agent acetylene black, a binder styrene-butadiene rubber (SBR), and a thickener sodium carboxymethylcellulose (CMC) were dissolved in a deionized water solvent according to a weight ratio of 90:4:4:2, and uniformly mixed to prepare a negative electrode slurry. Then, a negative electrode current collector copper foil was uniformly coated with the negative electrode slurry once or multiple times, and the coated negative electrode current collector copper foil was dried to obtain a negative electrode film, which was then subjected to cold pressing and slitting to obtain a negative electrode plate.
In an argon atmosphere glove box ($H_2O$ < 0.1 ppm, $O_2$ < 0.1 ppm), organic solvents fluoroethylene carbonate (FEC), ethylene carbonate (EC), and ethyl methyl carbonate (EMC) were uniformly mixed at a mass ratio of 1:2:7. Then, 12.5 wt% $LiPF_6$ lithium salt was added and dissolved in the organic solvent. Then, 2.0 wt% of fluoroethylene carbonate, 0.5 wt% of 1,3-propanesultone, and 0.5 wt% of succinic anhydride were added as additives to the above organic solvent, and mixed and stirred uniformly to obtain the electrolytic solution.

A polypropylene film was used as the separator.

The positive electrode plate, the separator, and the negative electrode plate were stacked in sequence, with the separator placed between the positive and negative electrode plates to fulfill the function of separation. The stack was then wound to obtain an electrode assembly, and the electrode assembly was placed in a battery housing. After drying, the electrolytic solution was injected, and then a lithium-ion battery was obtained through processes such as formation and standing.

**Examples 2 to 8**

The preparation methods of Examples 2 to 8 were substantially the same as that of Example 1, except for the changes in components or concentration of the electrolytic solution or the parameters of pulse deposition, as shown in Table 1.

**Example 9**

The preparation method of Example 9 was substantially the same as that of Example 1, except that the ratio of the negative electrode plate was changed. Specifically, the negative electrode active substance silicon-carbon (silicon content of 20 wt% to 50 wt%), the artificial graphite, the conductive agent acetylene black, the binder styrene-butadiene rubber (SBR), and the thickener sodium carboxymethylcellulose (CMC) were dissolved in the deionized water solvent at a mass ratio of 10:86:1:1.5:1.5, and uniformly mixed to prepare a negative electrode slurry. Then, the negative electrode current collector copper foil was uniformly coated with the negative electrode slurry once or multiple times, and the coated negative electrode current collector copper foil was dried to obtain a negative electrode film, which was then subjected to cold pressing and slitting to obtain a negative electrode plate.

**Example 10**

Example 10 was substantially the same as Example 9, except that the components in the negative electrode film layer remained unchanged, and the ratios of the components in the negative electrode film layer were adjusted. Specifically, for the negative electrode film layer, the negative electrode active substance silicon-carbon, the artificial graphite, the conductive agent acetylene black, the binder styrene-butadiene rubber (SBR), and the thickener sodium carboxymethylcellulose (CMC) were mixed in a ratio of 30:66:1:1.5:1.5.

**Example 11**

Example 11 was substantially the same as Example 10, except that the compaction density of the film layer of the negative electrode plate was adjusted, as shown in Table 4.

**Comparative Example 1**

The preparation method of Comparative Example 1 was substantially the same as that of Example 1, except that the electrodeposition method was changed, a direct current was used for deposition, and the deposition current density was 8.35 A/dm$^2$, as shown in Table 1.

**Comparative Example 2**

The preparation method of Comparative Example 2 was substantially the same as that of Example 9, except that a conventional copper foil in the prior art, with a thickness of 6 μm, was used as the current collector. Under the test conditions of room temperature, a sample thickness of 6 ± 0.2 μm, and a tensile speed of 50 ± 0.5 mm/min, the tensile strength of the copper foil was 350 MPa, and the elongation at break was 6.2%.

**Comparative Example 3**

The preparation method of Comparative Example 3 was substantially the same as that of Comparative Example 2, except that a pre-elongation process was added before cold pressing in the process of preparing the negative electrode plate. Specifically, a pre-elongation roller was added before cold pressing, the tension of the roller is 400 N to 700 N, and the blank area of the coated copper foil was elongated in advance, so as to avoid the wrinkle problem caused by the elongation of the film area and the non-elongation of the blank area during the cold pressing.

Table 1

| Serial number | Electroplating solution | | | | | | Pulse current | | |
|---|---|---|---|---|---|---|---|---|---|
| | Copper ion (g/L) | Leveling agent (mg/L) | Wetting agent (mg/L) | | Chloride ion (mg/L) | Brightener Bis-(sodium sulfopropyl)-disulfide (mg/L) | Peak current density (A/dm²) | Duty cycle | Peak current density × duty cycle (A/dm²) |
| | | | Polyethylene glycol | Hydroxyethyl cellulose | | | | | |
| Example 1 | 45 | 90 | 50 | 30 | 80 | 75 | 167 | 5% | 8.35 |
| Example 2 | 45 | 120 | 100 | 60 | 80 | 150 | 167 | 5% | 8.35 |
| Example 3 | 45 | 90 | 50 | 30 | 80 | 75 | 180 | 2% | 3.6 |
| Example 4 | 45 | 90 | 50 | 30 | 80 | 75 | 150 | 2% | 3 |
| Example 5 | 45 | 90 | 50 | 30 | 80 | 75 | 180 | 10% | 18 |
| Example 6 | 45 | 90 | 50 | 30 | 80 | 75 | 100 | 2% | 2 |
| Example 7 | 90 | 20 | 15 | 12 | 30 | 15 | 167 | 3.30% | 5.511 |
| Example 8 | 300 | 90 | 50 | 30 | 80 | 1 | 167 | 5% | 8.35 |
| Comparative Example 1 | 45 | 90 | 50 | 30 | 80 | 75 | Direct current 8.35 A/dm² | | |

**Performance Testing**

(1) Thickness Test

A sample with an area of $20 \times 15$ cm$^2$ was taken, and the thickness thereof was calculated by the weighing method as follows: The cut sample strip was weighed on an electronic balance to obtain its weight, and then the volume of the sample strip was calculated according to the density $\rho$ of 8.96 g/cm$^3$ of the copper foil; the length and the width of the sample strip were known, so the thickness of the sample strip could be calculated.

(2) Mechanical Property Test

According to GB/T 5230-1995 "Electrodeposited Copper Foil", a tensile sample strip with a length L0 of 200 mm and a width of 15 mm was cut, the test sample was placed on a balance for weighing, and the mass was recorded as m. A universal testing machine was used to test the tensile performance at 25 °C, and the tensile rate was set to 50 mm/min.

Then the cross-sectional area of the tensile sample strip was $S_0 = \dfrac{m}{\rho \times L_0}$, where $\rho$ is 8.96 g/cm$^3$, m is expressed in g, and $L_0$ is expressed in cm.

The test sample was continuously loaded with a tension until it broke, the maximum load F was read from the force dial or the tensile curve, and the tensile strength $\sigma_b$ was calculated according to Formula I.

$$\sigma_b = \frac{F}{S_0}$$

Formula I

The distance between two lines after the test sample breakage was $L_1$, which was measured on the test sample or read from the tensile curve. $L_1$ can be measured by a straight line method or a displacement method, and the elongation at break $\delta$ was calculated according to Formula II.

$$\delta = \frac{L_1 - L_0}{L_0}$$

Formula II

(3) Grain Characteristic Test of Copper Foil

The electron backscatter diffraction (EBSD) was combined with the scanning electron microscope to observe the cross section of the copper foil, where the model of the EBSD was Oxford C-Nano+. The pole figure map was obtained, the grain size of each grain was measured, and the diameter of the equivalent circle of the grain was used as the grain size of the grains. Statistical distribution analysis was performed on the grain size of the grains, a skewed distribution was used for fitting, and the grain size corresponding to the peak value was used as the average grain size of the grains in the copper foil. The number of twins was counted through the inverse pole figure map, different colors represent different grain orientations, and the red line inside the grains denotes a twin boundary, which represents that the grain has a twinned structure. The number proportion of nanotwinned grains was counted through the analysis software paired with the Oxford C-Nano+ electron backscatter diffraction instrument. A similar method was used to measure the number proportion of the equiaxed grains or the nearly equiaxed grains.

(4) Maximum Surface Roughness Test

The surface of the copper foil was wiped with alcohol, and the copper foil was placed on a horizontal plane steadily. A stylus-type roughness tester was placed on the surface of the copper foil, such that the stylus contacted the surface of the copper foil, and the stylus gently traversed the surface. The roughness of the copper foil was obtained through instrument reading. Measurements are performed five times at different parts of the copper foil, and the maximum value of the readings is taken as the maximum surface roughness of the copper foil.

(5) State of Health (SOH) Corresponding to Crack-Induced Failure

At 25 °C, the battery was charged at a constant current of 1C to a voltage of 3.8 V, then charged at a constant voltage of 3.8 V to a current ≤ 0.05C, and subsequently, the battery was discharged at a constant current of 1C to a voltage of 2.5 V. This was one charging and discharging cycle. Such charging and discharging cycles were repeatedly performed, and then whether a crack occurred inside the battery was determined using computerized tomography (CT). If the crack occurred, the battery with crack-induced failure in the cycling process was disassembled, the negative electrode plate in the battery was disassembled, sampling was performed at a position where the crack did not occur, the elongation at break of the sample was measured according to the measurement method of the elongation at break described above, and the SOH value of the battery in this case was calculated by simulation.

(6) Cycle Simulation Calculation:

The breakage model was established based on the finite element analysis, and the cell model was established with the jelly roll (JR) after hot pressing. Then, the tensile curve of the electrode plate was used as the mechanical parameter input, and the expansion force data of the single cell were used to benchmark the free rebound of the JR size, which was used as the crack model input. With the criterion that the elongation of the electrode plate under the expansion force of the single cell exceeds the elongation at break of the electrode plate, the state of health (SOH) corresponding to the electrode plate breakage during the long cycling process of the cell was simulated and analyzed.

(7) Observation of Tab Area After Cold Pressing:

If wrinkles appear in the blank area of the electrode plate, it was determined that the tab was wrinkled; if the blank area of the electrode plate remained flat without abnormalities, it was determined that the tab was not wrinkled.

**Test Results**

Table 2

| Serial number | Copper foil | | | | Battery |
| --- | --- | --- | --- | --- | --- |
| | Average grain size of the grains (nm) | Number proportion of twins | Tensile strength (MPa) | Elongation at break | SOH corresponding to crack-induced failure |
| Example 1 | 200 | 85.00% | 922 | 5.27% | 48%SOH |
| Example 2 | 213 | 80.50% | 856 | 5.50% | 55%SOH |
| Example 3 | 133 | 88.00% | 996 | 6.00% | 43%SOH |
| Example 4 | 207 | 82.60% | 910 | 5.00% | 52%SOH |
| Example 5 | 234 | 79.00% | 790 | 5.10% | 59%SOH |
| Example 6 | 200 | 80.60% | 880 | 5.00% | 57%SOH |
| Example 7 | 200 | 85.00% | 812 | 5.07% | 58%SOH |
| Comparative Example 1 | 809 | 56.00% | 360 | 5.00% | 75%SOH |

Table 3

| Serial number | Copper foil | | | | | Battery |
| --- | --- | --- | --- | --- | --- | --- |
| | Average grain size of the grains (nm) | Number proportion of twins | Maximum surface roughness (um) | Tensile strength (MPa) | Elongation at break | SOH corresponding to crack-induced failure |
| Example 1 | 200 | 85.00% | 0.12 | 922 | 5.27% | 48%SOH |
| Example 8 | 275 | 58.00% | 0.25 | 659 | 4.06% | 63%SOH |

The test results of the examples and the comparative examples are shown in Tables 1 to 3.

It can be seen from the comparison between the examples and the comparative examples that the average grain size of the grains in the copper foil according to the present application is 50 nm to 400 nm, and based on the total number of the grains in the copper foil, the number proportion of the twinned grains is not less than 60%. The copper foil exhibits excellent tensile strength and elongation at break, which can reduce the state of health (SOH) value corresponding to the crack-induced failure of the battery, and is conducive to improving the safety and cycle life of the battery.

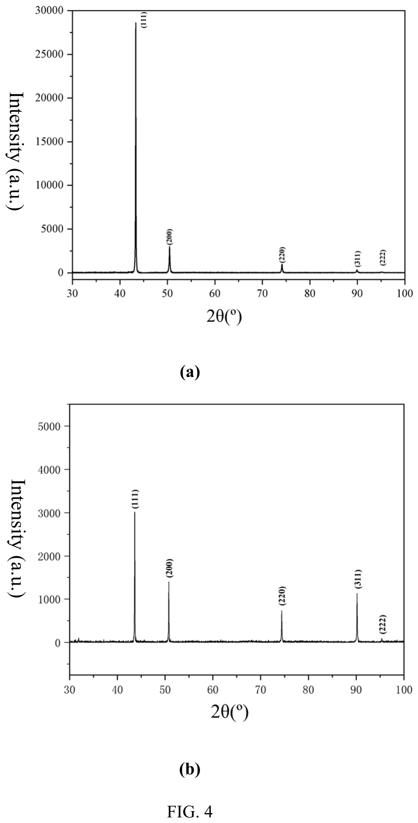

FIG. 1 is a schematic diagram of a grain size distribution of the copper foil in Example 1; FIG. 2 is an inverse pole figure map of an electron backscatter diffraction image of the copper foil in Example 1; and FIG. 3 is a diagram of a tensile curve of the copper foil in Example 1. With reference to FIGs. 1 and 2, it can be seen that the average grain size of the grains in the copper foil of Example 1 is 200 nm; the minimum grain size is about 10 nm; based on the total number of the grains in the copper foil, the number proportion of the grains with a grain size of 200 nm or less is 34%, the number proportion of the grains with a grain size of 200 nm to 500 nm is about 65%, and the number proportion of the grains with a grain size greater than 500 nm does not exceed 2%; the maximum surface roughness of the copper foil is 0.12 um. FIG. 4a is an X-ray diffraction pattern of the copper foil in Example 2. The plane diffraction intensity of the (111) texture in the copper foil accounts for 80.06% of the sum of the plane diffraction intensities of the (111), (200), (220), (311), and (222) textures in the copper foil. Compared with the copper foil in Comparative Example 1 shown in FIG. 4b, the proportion of the plane diffraction intensity of the (111) texture in the copper foil in the sum of the plane diffraction intensities of the (111), (200), (220), (311), and (222) textures in the copper foil is significantly increased.

As can be seen from Table 3, when the additives in the electroplating solution simultaneously contain the leveling agent, the wetting agent, and the brightener at a specific content, the maximum surface roughness of the copper foil can be reduced, and the tensile strength and the elongation at break of the copper foil can be further improved at the same time.

As can be seen from the comparison of Examples 1, 2, and 8, compared with the electroplating solution containing a high concentration of copper ions and a low concentration of additives, the electroplating solution containing a low concentration of copper ions and a high concentration of additives can further improve the tensile strength and the elongation at break of the copper foil.

As can be seen from the comparison of Examples 1, 4, and 6 with Example 5, the average grain size of the grains of the copper foil increases and the mechanical property decreases due to the high product of the peak current density and the duty cycle, but the performance still surpasses that of Comparative Example 1.

EP 4 723 250 A1

**Table 4**

| Serial number | Mass content of silicon-based material | Whether to perform pre-elongation before cold pressing or not | Compaction density (g/cm³) | Tensile elongation at break of electrode plate | Calculation of SOH corresponding to electrode plate breakage by simulation | Maximum expansion force of secondary battery cell/N | Cold-pressing elongation of electrode plate | Whether the tab is wrinkled or not |
|---|---|---|---|---|---|---|---|---|
| Example 9 | 10% | No | 1.5 | 3.4% | 22.3%SOH | 41200 | 0.06% | No |
| Example 10 | 30% | No | 1.5 | 3.1% | 44.6%SOH | 37400 | 0.08% | No |
| Example 11 | 30% | No | 1.75 | 2.8% | 58.2%SOH | 29500 | 0.10% | No |
| Comparative Example 2 | / | No | / | / | / | / | / | Yes |
| Comparative Example 3 | 10% | Yes | 1.5 | 1.9% | 73.2%SOH | 15600 | 0.32% | No |

24

As can be seen from the comparison of Examples 9 to 11 with Comparative Example 3, the secondary battery includes a negative electrode plate, the negative electrode plate includes a negative electrode current collector and a negative electrode film layer disposed on at least one side of the negative electrode current collector. The negative electrode film layer includes a negative electrode active material, the negative electrode active material includes a silicon-based material, and the tensile elongation at break of the negative electrode plate at room temperature is greater than or equal to 2%, which can reduce the SOH corresponding to the electrode plate breakage of the battery cell and prolong the service life of the battery.

As can be seen from the comparison of Examples 9 to 11 with Comparative Example 2, when the current collector of this embodiment is applied to a secondary battery containing a silicon-based material, the tabs do not wrinkle after the pre-elongation process is canceled during the preparation of the negative electrode plate, thereby optimizing the battery production process and improving the production efficiency.

It should be noted that the present application is not limited to the embodiments described above. The embodiments described above are merely examples, and any embodiments having a structure substantially identical to the technical concept and exerting the same functional effects within the scope of the technical solutions of the present application are all included within the technical scope of the present application. Furthermore, without departing from the spirit of the present application, various modifications that can be conceived by those skilled in the art to the embodiments, as well as other embodiments formed by combining some of the constituent elements of the embodiments, are also included within the scope of the present application.

**Claims**

1. A current collector, wherein the current collector comprises a copper foil, an average grain size of grains in the copper foil is 50 nm to 400 nm, and based on a total number of the grains in the copper foil, a number proportion of nanotwinned grains is greater than or equal to 60%.

2. The current collector according to claim 1, wherein the grains in the copper foil satisfy one or more of the following features:

   (1) the average grain size of the grains in the copper foil is 50 nm to 300 nm;
   (2) based on the total number of the grains in the copper foil, a number proportion of grains with a grain size of less than 200 nm is 20% to 40%, and a number proportion of grains with a grain size of 200 nm to 500 nm is 50% to 80%;
   (3) based on the total number of the grains in the copper foil, a number proportion of grains with a grain size of greater than 500 nm is less than or equal to 5%;
   (4) based on the total number of the grains in the copper foil, a number proportion of equiaxed grains or nearly equiaxed grains is greater than or equal to 80%, and a ratio $a1$ of a length of a major axis to a length of a minor axis of the equiaxed grain or the nearly equiaxed grain satisfies: $1 \le a1 < 2$;
   (5) based on the total number of the grains in the copper foil, a number proportion of columnar grains is less than 10%, and a ratio $a2$ of a length of a major axis to a length of a minor axis of the columnar grain satisfies: $a2 > 2$;
   (6) a proportion of plane diffraction intensity of (111) texture in the copper foil in a sum of plane diffraction intensities of (111), (200), (220), (311), and (222) textures in the copper foil is 60% to 85%;
   (7) the copper foil has a first surface and a second surface that are opposite to each other, a thickness of the copper foil is denoted as H, a region extending from the first surface of the copper foil to a thickness range of 0.2H to 0.5H is defined as a first region of the copper foil, a region extending from the second surface of the copper foil to a thickness range of 0.2H to 0.5H is defined as a second region of the copper foil, and an absolute value of a difference between the average grain size of grains in the first region and the average grain size of grains in the second region is less than or equal to 150 nm; and
   (8) based on the total number of the grains in the copper foil, the number proportion of the nanotwinned grains is 65% to 90%.

3. The current collector according to claim 1 or 2, wherein the copper foil satisfies one or more of the following features:

   (1) a maximum surface roughness of the copper foil is less than or equal to 3 μm;
   (2) a thickness H of the copper foil satisfies: $3 \mu m \le H \le 15 \mu m$;
   (3) under test conditions of room temperature, a sample thickness of $6 \pm 0.2 \mu m$, and a tensile speed of $50 \pm 0.5$ mm/min, a tensile strength of the copper foil is greater than or equal to 600 MPa, and an elongation at break of the copper foil is greater than or equal to 4%; and
   (4) under the test conditions of room temperature, the sample thickness of $6 \pm 0.2 \mu m$, and the tensile speed of 50

$\pm$ 0.5 mm/min, the tensile strength of the copper foil is 700 MPa to 1500 MPa, and the elongation at break of the copper foil is 4.5% to 10%.

4. An electrode plate, wherein the electrode plate comprises the current collector according to any one of claims 1 to 3.

5. A secondary battery, comprising the electrode plate according to claim 4.

6. The secondary battery according to claim 5, wherein a maximum expansion force of a secondary battery cell is greater than or equal to 1000 kgf.

7. The secondary battery according to claim 5, wherein a maximum expansion force of a secondary battery cell is greater than or equal to 2500 kgf.

8. The secondary battery according to claim 5, wherein a maximum expansion force of a secondary battery cell is greater than or equal to 4000 kgf.

9. The secondary battery according to any one of claims 5 to 8, wherein the electrode plate is a negative electrode plate, the negative electrode plate comprises the current collector and a negative electrode film layer disposed on at least one side of the negative electrode current collector, the negative electrode film layer comprises a negative electrode active material, the negative electrode active material comprises a silicon-based material, and a tensile elongation at break of the negative electrode plate at room temperature is greater than or equal to 2%.

10. The secondary battery according to claim 9, wherein the tensile elongation at break of the negative electrode plate at room temperature is 3% to 5%.

11. The secondary battery according to claim 9, wherein a compaction density of the negative electrode plate is greater than or equal to 1.5 g/cm$^3$, and a cold-pressing elongation of the negative electrode plate is less than or equal to 0.1%.

12. The secondary battery according to claim 11, wherein the cold-pressing elongation of the negative electrode plate is 0.06% to 0.1%.

13. The secondary battery according to claim 9 or 10, wherein a compaction density of the negative electrode plate is 1.5 g/cm$^3$ to 2.0 g/cm$^3$.

14. The secondary battery according to any one of claims 9 to 13, wherein based on a total mass of the negative electrode film layer, a mass content of the silicon-based material is 5% to 100%.

15. The secondary battery according to any one of claims 9 to 14, wherein based on the total mass of the negative electrode film layer, the mass content of the silicon-based material is 10% to 60%.

16. The secondary battery according to any one of claims 9 to 15, wherein a thickness of the current collector is 2 $\mu$m to 10 $\mu$m.

17. An electric device, comprising the secondary battery according to any one of claims 5 to 16.

18. A preparation method for a copper foil, wherein the copper foil is prepared by using an electroplating method; the electroplating method specifically comprises periodically applying a current to an electroplating solution, such that copper ions in the electroplating solution are reduced and deposited to form a copper foil; an average grain size of grains in the copper foil is 50 nm to 400 nm, and based on a total number of the grains in the copper foil, a number proportion of nanotwinned grains is greater than or equal to 60%.

19. The preparation method according to claim 18, wherein the current is a pulse current, and the pulse current comprises one or more of a square wave pulse current, a sinusoidal wave pulse current, a triangular wave pulse current, and a sawtooth wave pulse current.

20. The preparation method according to claim 18 or 19, wherein the electroplating solution comprises an additive, and the additive comprises one or more of a leveling agent, a wetting agent, and a brightener.

21. The preparation method according to any one of claims 18 to 20, wherein the additive comprises the leveling agent, the wetting agent, and the brightener.

22. The preparation method according to claim 20 or 21, wherein the electroplating solution satisfies one or more of the following conditions:

(1) a concentration of the leveling agent in the electroplating solution is 20 mg/L to 300 mg/L;
(2) the concentration of the leveling agent in the electroplating solution is 50 mg/L to 150 mg/L;
(3) a concentration of the wetting agent in the electroplating solution is 10 mg/L to 200 mg/L;
(4) the concentration of the wetting agent in the electroplating solution is 30 mg/L to 100 mg/L;
(5) a concentration of the brightener in the electroplating solution is 10 mg/L to 200 mg/L;
(6) a concentration of copper ions in the electroplating solution is 30 g/L to 100 g/L;
(7) the concentration of the copper ions in the electroplating solution is 45 g/L to 75 g/L;
(8) a concentration of chloride ions in the electroplating solution is 10 mg/L to 80 mg/L; and
(9) a pH of the electroplating solution is 2.5 to 4.4.

23. The preparation method according to any one of claims 20 to 22, wherein the leveling agent comprises one or more of gelatin and Janus green; the wetting agent comprises one or more of hydroxyethyl cellulose and polyethylene glycol, and the brightener comprises one or more of bis-(sodium sulfopropyl)-disulfide, sodium 3-mercapto-1-propanesulfonate, and thiourea.

24. The preparation method according to any one of claims 20 to 23, wherein the wetting agent comprises hydroxyethyl cellulose and polyethylene glycol.

25. The preparation method according to any one of claims 22 to 24, wherein a mass concentration ratio of the copper ions to the leveling agent is 500:1 to 4500:1; and/or
a mass concentration ratio of the copper ions to the brightener is 300:1 to 6000:1.

26. The preparation method according to any one of claims 20 to 25, wherein the electroplating solution comprises gelatin with a concentration of 20 mg/L to 150 mg/L, polyethylene glycol with a concentration of 15 mg/L to 100 mg/L, hydroxyethyl cellulose with a concentration of 10 mg/L to 80 mg/L, bis-(sodium sulfopropyl)-disulfide with a concentration of 15 mg/L to 150 mg/L, copper ions with a concentration of 45 g/L to 90 g/L, and chloride ions with a concentration of 10 mg/L to 80 mg/L.

27. The preparation method according to any one of claims 19 to 26, wherein
a peak current density of the pulse current is represented by I, with a unit of A/dm$^2$, a current duty cycle of the pulse current is represented by s, and the peak current density I and the duty cycle s satisfy: $2 \text{ A/dm}^2 \leq I \times s \leq 18 \text{ A/dm}^2$.

28. The preparation method according to any one of claims 19 to 27, wherein the electroplating method satisfies one or more of the following conditions:

(1) the peak current density I of the pulse current satisfies: $3.3 \text{ A/dm}^2 \leq I \leq 333 \text{ A/dm}^2$;
(2) the duty cycle s of the pulse current satisfies: $2\% \leq s \leq 50\%$;
(3) a pulse width of the pulse current is 1 ms to 50 ms;
(4) a distance between a cathode electrode and an anode electrode is 15 mm to 20 mm;
(5) a temperature of the deposition is 45 °C to 60 °C; and
(6) a duration of the deposition is greater than or equal to 80 s.

29. The preparation method according to any one of claims 19 to 28, wherein the electroplating method specifically comprises periodically applying the pulse current to the electroplating solution, such that the copper ions in the electroplating solution are reduced and deposited, wherein the peak current density I of the pulse current satisfies $100 \text{ A/dm}^2 \leq I \leq 180 \text{ A/dm}^2$, the duty cycle s of the pulse current satisfies $2\% \leq s \leq 10\%$, and the duration of the deposition is 80 s to 250 s.

30. The preparation method according to any one of claims 18 to 29, wherein the preparation method is a continuous production method.

31. A copper foil, wherein the copper foil is prepared by using the preparation method according to any one of claims 18 to 30.

**32.** The copper foil according to claim 31, wherein a maximum width of the copper foil is greater than or equal to 1.5 meters, and/or a maximum length of the copper foil is greater than or equal to 10,000 meters.

FIG. 1

FIG. 2

FIG. 3

**(a)**

**(b)**

FIG. 4

<u>5</u>

FIG. 5

<u>5</u>

FIG. 6

<u>4</u>

FIG. 7

<u>1</u>

FIG. 8

FIG. 9

FIG. 10

## INTERNATIONAL SEARCH REPORT

International application No.

**PCT/CN2024/114594**

### A. CLASSIFICATION OF SUBJECT MATTER

H01M4/66(2006.01)i; C25D1/04(2006.01)i; C25D1/00(2006.01)i

According to International Patent Classification (IPC) or to both national classification and IPC

### B. FIELDS SEARCHED

Minimum documentation searched (classification system followed by classification symbols)

IPC: H01M4/-; C25D1/-

Documentation searched other than minimum documentation to the extent that such documents are included in the fields searched

Electronic data base consulted during the international search (name of data base and, where practicable, search terms used)

CNTXT, DWPI, ENTXTC, CNKI, ISI_WEB OF SCIENCE: 电池, 集流体, 铜箔, 粒径, 孪晶, 双晶, 还原, 沉积, battery, collector, copper foil, size, twin+ 2d grain, reduct+, deposit+

### C. DOCUMENTS CONSIDERED TO BE RELEVANT

| Category* | Citation of document, with indication, where appropriate, of the relevant passages | Relevant to claim No. |
|---|---|---|
| X | CN 114908386 A (JIANGXI UNIVERSITY OF SCIENCE AND TECHONOLOGY et al.) 16 August 2022 (2022-08-16) <br> description, paragraphs 0019, 0022, 0027, 0030, 0032, 0036, and 0073 | 1-32 |
| X | CN 116590762 A (JIUJIANG DEFU TECHNOLOGY CO., LTD.) 15 August 2023 (2023-08-15) <br> description, paragraph 0018 | 1-32 |
| A | CN 114232037 A (INSTITUTE OF METAL RESEARCH, CHINESE ACADEMY OF SCIENCES) 25 March 2022 (2022-03-25) <br> entire document | 1-32 |
| A | CN 115786997 A (CONTEMPORARY AMPEREX TECHNOLOGY CO., LTD.) 14 March 2023 (2023-03-14) <br> entire document | 1-32 |
| A | US 2014045061 A1 (FURUKAWA ELECTRIC CO., LTD.) 13 February 2014 (2014-02-13) <br> entire document | 1-32 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 November 2024** | **11 November 2024** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/114594** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2009057688 A1 (MITSUI MINING & SMELTING CO., LTD. et al.) 07 May 2009 (2009-05-07) entire document | 1-32 |

Form PCT/ISA/210 (second sheet) (July 2022)

**INTERNATIONAL SEARCH REPORT**
Information on patent family members

International application No.

**PCT/CN2024/114594**

| Patent document cited in search report | | | Publication date (day/month/year) | Patent family member(s) | | | Publication date (day/month/year) |
|---|---|---|---|---|---|---|---|
| CN | 114908386 | A | 16 August 2022 | None | | | |
| CN | 116590762 | A | 15 August 2023 | None | | | |
| CN | 114232037 | A | 25 March 2022 | None | | | |
| CN | 115786997 | A | 14 March 2023 | None | | | |
| US | 2014045061 | A1 | 13 February 2014 | KR | 20130094821 | A | 26 August 2013 |
| | | | | KR | 101669087 | B1 | 25 October 2016 |
| | | | | KR | 20150097821 | A | 26 August 2015 |
| | | | | EP | 2660359 | A1 | 06 November 2013 |
| | | | | EP | 2660359 | A4 | 05 August 2015 |
| | | | | US | 9890463 | B2 | 13 February 2018 |
| | | | | TW | 201323664 | A | 16 June 2013 |
| | | | | TWI | 496954 | B | 21 August 2015 |
| | | | | WO | 2013018773 | A1 | 07 February 2013 |
| WO | 2009057688 | A1 | 07 May 2009 | TW | 200936817 | A | 01 September 2009 |
| | | | | TWI | 530590 | B | 21 April 2016 |
| | | | | JP | 2009221592 | A | 01 October 2009 |
| | | | | JP | 5588607 | B2 | 10 September 2014 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410146761